(19) Europäisches Patentamt
European Patent Office
Office européen des brevets

(11) **EP 3 609 342 B1**

(12) **EUROPEAN PATENT SPECIFICATION**

(45) Date of publication and mention
of the grant of the patent:
**06.10.2021   Bulletin 2021/40**

(51) Int Cl.:
***A23G 1/00*** (2006.01)

(21) Application number: **18717903.1**

(22) Date of filing: **11.04.2018**

(86) International application number:
**PCT/EP2018/059346**

(87) International publication number:
**WO 2018/189275 (18.10.2018 Gazette 2018/42)**

(54) **PROCESS FOR REDUCING THE VISCOSITY OF FAT BASED COMPOSITIONS**

VERFAHREN ZUR VERMINDERUNG DER VISKOSITÄT FETTHALTIGER
ZUSAMMENSETZUNGEN

PROCÉDÉ POUR REDUIRE LA VISCOSITÉ DES PRODUITS CONTENANT DE LA GRAISSE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **12.04.2017  EP 17166306**
**12.04.2017  EP 17166305**
**12.04.2017  EP 17166309**
**12.04.2017  EP 17166310**
**12.04.2017  EP 17166312**
**12.04.2017  EP 17166313**

(43) Date of publication of application:
**19.02.2020  Bulletin 2020/08**

(73) Proprietor: **Société des Produits Nestlé S.A.**
**1800 Vevey (CH)**

(72) Inventors:
• VIEIRA, Josélio, Batista
  York YO31 8LG (GB)
• MASANI, Ruzbeh, Feroze
  York YO31 8AB (GB)
• PARKER, Ritchie, David
  1803 Chardonne (CH)
• NICHOLSON, Elizabeth
  Cottingham HU16 4BD (GB)
• KHOMYN, Ostap
  York YO30 6FG (GB)
• CHONG, Peng-Siong
  York YO30 4TD (GB)

(74) Representative: **Lumsden, Stuart Edward Henry**
**Société des Produits Nestlé S.A.**
**Avenue Nestlé 55**
**1800 Vevey (CH)**

(56) References cited:
EP-A1- 1 673 977          EP-A1- 2 233 014
EP-A1- 2 567 621          WO-A1-2004/000028
WO-A1-2014/092923     WO-A1-2016/025730
US-A- 3 663 231           US-A- 5 232 734
US-A- 5 676 995

• AFOAKWA ET AL: "Factors influencing
rheological and textural qualities in chocolate - a
review", TRENDS IN FOOD SCIENCE AND
TECHNOLOGY, ELSEVIER SCIENCE
PUBLISHERS, GB, vol. 18, no. 6, 10 May 2007
(2007-05-10), pages 290-298, XP022069623, ISSN:
0924-2244, DOI: 10.1016/J.TIFS.2007.02.002

**Description**

The present invention relates to a process for reducing the viscosity of a fat based composition and compositions so prepared. The invention is particularly useful to replace or at least significantly shorten or otherwise optimize the traditional conching of fat based mixtures such as carried out in the chocolate making process.

In the traditional manufacture of chocolate or chocolate-like compounds, finely ground powders are dispersed in a continuous fat phase. The powders found in chocolate or chocolate-like compounds are traditionally sugar, cocoa solids and/or milk solids. These are mixed in differing proportions together with cocoa butter and/or vegetable fats, milk fats and emulsifier(s), such as lecithin. Plain chocolate is obtained by mixing sugar, cocoa butter, optionally other fats, and cocoa mass. Milk chocolate contains fat and milk non-fat solids as additional ingredients. White chocolate contains milk fat and milk non-fat solids, sugar and cocoa butter and/or vegetable fat without the addition of the cocoa mass or cocoa powder. Chocolate compounds may also be produced by using alternative fats in place of or in conjunction with natural cocoa butter. Such alternative fats belong to three main categories which are cocoa butter equivalents (CBE), cocoa butter substitutes (CBS), cocoa butter replacers (CBR). Detailed discussions of these different types of alternative fats can be found in a variety of sources, see for example, Traitler, H. et al., Journal of the American Oil Chemists Society, 62(2), 417-21 (1985).

Like many foods, chocolate and chocolate like compounds are non-Newtonian fluids whose viscosity varies according to how quickly the fluid is stirred or pumped. Chocolate is very thick when static but becomes increasingly thin when stirred or pumped more rapidly. Non-Newtonian flow can be represented by two parameters yield value (also referred to herein as YV or yield) and the plastic viscosity (also referred to herein as PV). Plastic viscosity is the force required to maintain a constant flow of a chocolate mass and is typically measured in Pascal seconds (Pa.s). Yield value is the force required to initiate movement in a chocolate mass and is typically measured in Pascals (Pa).

As used herein unless the context clearly indicates otherwise the term 'viscosity' refers to plastic viscosity (PV) and PV is preferably measured according to ICA method 46 (2000) with the Servais method referred to herein providing an alternative method of measuring PV.

In the traditional method for producing chocolate, the chocolate ingredients are mixed and ground in a refiner or mill for a sufficient time to reduce the particle size of the constituent solids to form a powdery mass (also referred to herein as chocolate flake). In the process step known as conching this powdery mass is stirred (conched) in a generally open mixer (conch), though partially closed or even closed conches are also known. Whilst in the conch the mass is heated at a temperature from 50 to 110°C for a period of time ranging from a few hours to a few days depending on the type of product and equipment used. Once conching is completed the resultant chocolate is usually tempered and then the tempered chocolate is cooled for a suitable period of time.

Conching of the refined flakes is regarded as essential to develop an acceptable texture in the final chocolate. Mixing in the conch creates shear to break up agglomerates of solid particles that would otherwise adhere together due to pressure or water bridges. Mixing also coats these solid particles with fat and disperses the fat coated particles evenly throughout the chocolate mass. Conching may additionally change the flavour of the mass and remove unwanted volatile compounds such as water or acetic acid by evaporation.

Though the conch is very important in the chocolate making process it is a very inefficient mixer, taking up to three days for the finest chocolate (one day being more typical for conventional chocolate) to achieve the desired texture and quality. The conching step is thus both energy intensive and time consuming. To improve conching efficiency high shear mixers have been developed that generate high shear flow in the mass by means such as rotating stripping elements or vanes revolving along an inner surface of a large container. Even with the use of high shear, liquefying chocolate flake is time consuming as in a typical conch has a ratio of size to surface volume that means that only a small amount of the chocolate mass can be sheared at one time. Conches that are capable of liquefying chocolate on an industrial scale (e.g. at a throughput of tonnes per hour) occupy a considerable floor space in the factory and the capital cost of industrial sized conches is very high.

Thus whilst there are many well-known problems with current conching methods, conching is still seen as an irreplaceable step in making chocolate though conching is not well understood.

The current knowledge of conching is described and summarised in standard reference works, one of the most widely used being as "Industrial Chocolate Manufacture and Use (Beckett). The currently avilable version of Beckett is the 4th ed", published in 2009. The parts of Beckett most relevant to conching are Chapter 8 - 'Flavour development in cocoa and chocolate' (especially section 8.5 that focuses on specifically on flavour development in conching); Chapter 9 'Conching' that explains in detail why conching is used to prepare chocolate; and Chapter 10 'Chocolate Flow Properties; that describes the current understanding of the rheological properties of chocolate. These parts of Beckett 4th ed are incorporated herein by reference as evidence of the current common general knowledge by those skilled in the art in relation to conching.

Beckett acknowledges that conching is not well understood and for example in in section 9.1.1. *'Flavour development'* Beckett states:

*... It is the function of conching to remove the more distasteful of these flavours and yet retain the more desirable ones. It is possible to 'over conche' and produce a very bland product. The actual required flavour, and hence the conching time, will depend upon the initial cocoa flavour intensity and the product in which it is being used ...*
Beckett goes on to state

*... The actual physico-chemical changes which take place, as described in Chapter 8, are very complicated and not fully understood. However, the objective of conching is essentially the removal of undesirable flavours, the transfer of flavour components between the ingredients and in certain circumstances the development of more desirable ones to match the final product..."*

The following section of Beckett is *'9.1.2 Flow property optimization'* that further teaches: "*... In the majority of chocolate manufacturing plants the conche is preceded by a roll refiner or a hammer mill. These grind the chocolate masse to produce a crumbly paste or powder. It is the function of the conche to treat this and turn it into a flowable liquid, which can be poured into a mould or over the product centre...* "
and also
"*... The conching process is required to smear the fat over these surfaces, so that the particles can flow past one another. In addition some of the particle form loosely connected agglomerates, perhaps due to the presence of moisture or amorphous sugar on the sugar surface (Niediek, 1970). These too must be broken up by the mixing action of the conche....* "

A 2007 review article from Afoakwa et al, "Factors influencing rheological and textural qualities in chocolate - a review", Trends in Food Sci &Tech 18, 2007, 290-298, concludes (on page 297) :

*The physical properties, rheological behaviour and sensory perception of chocolate are influenced largely by its processing techniques, particle size distribution and ingredient composition. To enhance chocolate texture, solid particle size distribution and ingredient composition can be manipulated to modify the physical properties, rheological behaviour and sensorial attributes. Several improvements have been made in recent years on chocolate quality using varying processing strategies and ingredient composition. However, the use of particle size distribution and ingredient composition as tools to modify the rheological behaviour and sensory properties of chocolate still require a greater understanding of underlying principles and factors affecting changes in flow behaviour. Thus, factors shaping chocolate character during and after its manufacture require much in-depth investigation. Further studies require integration of sensory and instrumental analyses of texture and flavour release and characterizations of effects of tempering on melting behaviour of chocolate."*

A further theoretical discussion of the rheology of chocolate is also given in the 2004 article *"Determination of chocolate viscosity"*, C. Servais, H. Ranc and I.D. Roberts, Journal of Texture Studies, 34, 467-497. Servais assess a Casson model for measuring the viscosity of chocolate in a factory and validates the accuracy of methods used to measure viscosity that are available in a typical chocolate factory. The method described in Servais is one of the optional preferred methods to measure viscosity herein (unless the context indicates another method) and to this extent Servais is incorporated herein by reference. However Servais also concludes that there is no general relationship between yield stress (YS) and plastic viscosity (PV) of chocolate and states that the relationships found in this paper are *'very specific to the actual chocolate process'* (bottom of page 492).

Another article from 2009 that describes chocolate rheology is *"Comparison of rheological models for determining dark chocolate viscosity"* International Journal of Food Science and Technology, 44, 162-167, Emmanuel Ohene Afoakwa, Alistair Paterson, Mark Fowler & Joselio Vieira. This paper describes the chocolate rheology parameters that are important in manufacturer of chocolate which are given as: shear viscosity and yield stress, both of which are stated to be directly influenced by product particle size distribution (PSD) and composition. This teaches away from considering other parameters as important to chocolate rheology. Afoakwa does not suggest a means by which these parameters (or any others) could be used quantitatively to control viscosity during manufacturer. Instead Afoakwa concludes (on column 2, page 166) that: *"The complexity of behaviour combined with the nature of chocolate flow often is an issue when choosing a representation or equation for evaluating the rheological properties of chocolates. Given sufficient data points, the use of interpolation data usually poses no difficulty, but extrapolation should be avoided."*

Thus the literature such as Beckett illustrate a common and long standing belief that chocolate rheology is complex and difficult to predict and show general skepticism in the field that rheological models can be of practical use in industrial environment. Current common general knowledge teaches a skilled person that it is extremely challenging to model accurately rheological changes that occur in a chocolate mass during conching.

Another factor which it has been thought was important to achieve the desired viscosity in a chocolate conching process is the reduction of the moisture. The literature teaches that presence of moisture leads to significant particle aggregation and networking due to water bridging and forms a capillary suspension (Koos E., Willenbacher N. Science 331 (6019) (2011) 897-900). Capillary suspensions consist of particle suspensions with a small amount of a secondary liquid immiscible (i.e. water) with the bulk liquid, i.e. fat phase. Capillary suspensions are formed when the secondary liquid wets the particles more than the bulk phase, causing the particles to be connected by a concave water bridge, which induces capillary forces. Typically, the attraction energy between such particles connected by capillary forces is many times higher than thermal energy kT, and order of magnitude higher than van der Waals forces and gravity (Koos E. Curr. Opin. Colloid Interface Sci. 19 (6) (2014) 575-684). The relationship between capillary forces $F_c$ and yield stress $\sigma_y$ for equally-sized particles in direct contract is given by

$$\sigma_y = f\big(\emptyset, N_{bridge}\big) \frac{F_c}{a^2} = f\big(\emptyset, N_{bridge}\big) f\big(V_{bridge}\big) \frac{2\pi\Gamma \cos\theta}{a}$$

Therefore the yield stress $\sigma_y$ of a capillary suspension depends on the particle radius $a$, the interfacial tension $\Gamma$ between the liquids, the contact angle $\theta$ of the three phases, and the number and volume of water bridges (Bossler F., Koos E. Langmuir 32 (6) (2016) 1489-1501).

In a conventional conch the impact of capillary forces on the yield value and viscosity of chocolate is achieved by reducing moisture content of the chocolate mass before or during conching. Thus a typical moisture content of a powdery mass such as chocolate flake before conching may be 1.5% by weight which is reduced to 0.8 % or less by weight after conching to achieve a PV of from 2 to 6 Pa.s and a yield of from 4 to 10 Pa at 40°C (Ziegleder G, Balimann G, Mikle H, Zaki H. süsswaren (confectionery) number 3, 4 and 5, (2003)). The perceived tolerance for moisture of chocolate masses obtained from other processes, such as the crumb process, may be slightly higher (the moisture content being 1.2% or less by weight) but it is still believed that these products should be low in moisture after processing.

The diffusion coefficient of water in a liquid hydrocarbon (like fat) is extremely low, in the order of $10^{-9} m^2 s^{-1}$, so reducing the moisture content to an acceptable level requires prolonged mixing time and heating using a conventional batch conch. Thin-film evaporators for cocoa liquor (such a column apparatus sold by Petzomat) were developed over 30 years ago in an attempt to address this perceived issue of the need to remove undesired volatiles and also water more quickly. Such so-called 'high efficiency' conches were capable of liquefying chocolate more quickly reducing conching times to from 6 to 24 hours compared to about 72 hours using earlier longitudinal conches. Continuous conches with extrusion systems have also be used to speed up liquefaction. However whether using conventional, high efficiency or continuous conches, it has still been thought necessary to reduce the moisture content of the chocolate mass as much as possible. Thus until the present a skilled person has been taught to achieve desired flow properties of a chocolate mass the process must reduce moisture content to a low level, typically less than 0.8% by weight. This also results in the complementary technical prejudice that preparing liquefied chocolate with high moisture content (especially for amounts of 1.3% or more by weight) would be very challenging and be impractical and/or uneconomic if not impossible.

Unless the context indicates otherwise the terms 'low level of moisture' or 'low moisture content' as used herein (especially when referring to known choco-materials and/or choco-materials of and/or used in the present invention) denotes that moisture (if present as the term optionally encompasses the absence of moisture) is optionally present in an amount usefully less than 1.2%, more usefully less than 1.1%, even more usefully less than 1.0%, most usefully less than 0.9%, for example less than 0.8%, by weight of the total weight of the composition referred to (such as choco-material). Where the fat based material is chocolate or compound prepared by a crumb process, the term 'low moisture' will generally denote that the material has a moisture level of no more than 1.2% by weight. For fat based materials other than chocolate or compound (or chocolate or compound prepared by processes other than the crumb process) the term 'low moisture' will generally denote that the material is even drier, having a moisture level of no more than 0.8% by weight. It will also be appreciated that when referring to any amount, content or level in compositions described herein the terms 'moisture' and 'water' are used herein interchangeably.

Unless the context indicates otherwise the term 'high level of moisture' or 'high moisture content' as used herein (especially when referring to choco-materials of and/or used in the present invention) denotes that the moisture is present in an amount of conveniently at least 1.3%, more conveniently at least 1.5%, even more conveniently at least 1.8%, most conveniently at least 2.0%, for example at least 2.5%, by weight of the total weight of the composition referred to (such as a choco-material).

It will also be understood that the moisture levels referred to herein are those in a fat based material immediately after it has been prepared (for example in a process of the invention) and do not refer to moisture levels in an aged material where for example humidity may be absorbed from the environment in which the material has been stored.

So for these reasons there is a common assumption in the art that conching must also be used as or in combination with a drying step at any stage before or during conching to achieve the required low level of moisture. A skilled person is taught that chocolate must have a low water content of no more than 0.8% by weight (no more than 1.2% by weight if using a crumb process) before conching for the conching to be efficient. For example in prior art methods there may be a separate step to dry flake before conching; reduced pressure may be applied to a conch to evaporate water from the mass more quickly during conching and/or the mass may be over-worked in the open conch to provide more time to evaporate additional water. All of these drying steps are disadvantageous as for example they add time and/or complexity to the process.

Over-work refers to mixing the mass in a conch even after the target viscosity has been achieved. In a factory environment it is very difficult consistently and reliably to prevent chocolate mass from being over worked. During conching to determine viscosity of the chocolate mass samples are periodically taken and analysed off line. It can take many minutes for the results of the analysis to be communicated to the operator of the conch for action to be taken, a period of 40 minutes being typical before the results of the analysis can be returned to the operators and be acted upon. Thus with off-line analytical methods the mass will be overworked for many minutes even assuming that a sample was taken (by chance) at the moment the desired viscosity was reached. For an industrial line with a throughput of many tonnes per hour even a few minutes of overworking the mass wastes significant energy and material. Increasing the frequency of sampling to determine viscosity will add expense and cannot eliminate the delay completely, so with current conching methods over-working the chocolate mass is unavoidable.

Routine over-work of chocolate mass will of course waste energy but has further disadvantage of adversely effecting other desired properties of chocolate. For example the texture of over-worked chocolate can be undesirable e.g. if the particle size is too small due to over grinding. The flavour of over-worked chocolate can also be undesirable.

Typically conching is performed in a generally open vessel and longer the mass spends being conched the more of the volatile components that will be released. Typically the degree of evaporation during conching is not well controlled and not all the material that is removed consists of undesired flavours such as acetic acid. Thus by overworking the mass there is a greater chance of also removing a greater proportion of the volatiles that may otherwise may impart consumer desired flavour notes to the chocolate. Because of the perceived need to dry the mass it is difficult to control conching to achieve a desired flavour of the resultant liquid mass, as flavour concerns are compromised due to this factor amongst many others.

Various other methods to improve or replace conching have also been described in the patent literature.

The applicant's patent application WO2004-00028 describes a process for lowering the viscosity of a mixture of a refined powdery fat that comprises solids and fat. The mass is submitted at a rate so that there sufficiently high flow in an elongate direction to break up agglomerates and intimate interactions between solids and fat. This produces a pasty mass comprising solids coated with fat. However the is little guidance in this document how this device and process can be operated most efficiently.

EP 0603487 relates to a process for plastically extruding a fat-confectionery material comprising feeding a fat-confectionery material, usually chocolate, into an extruder barrel and applying pressure of a piston to the material in a substantially solid or semi-solid non-pourable form upstream a flow constriction of a die at a temperature at which the material is extruded isothermally. This process enables to form chocolate by extrusion. The starting material is a fat-based confectionery material in a liquid, paste or solid or semi-solid form but is already composed of solids that are already coated with the fat. Therefore, it is already chocolate product when entering into the extruder. Usually, this material is in the form of chocolate buttons. The process is a forming operation to provide a temporarily plastic end product from a solid material but is not an operation pertaining to the chocolate making process 'per se'.

EP 0775446 also relates to cold extrusion of chocolate where the starting material is already chocolate.

US 4679498 relates to a method and apparatus for rapid preparation of a chocolate paste from a pasty mass of solids and cocoa butter. A refined paste is subjected to a dry conching treatment in a screw conveyor, and is then liquefied as additives are incorporated proportionally according to the recipe. The dry conching stage comprises a first simple kneading step then a second kneading step where the intensity of shearing and rolling is gradually increased. Conching occurs in a screw conveyor, where the screw provides shearing and rolling and then elongational flow at the conveyor exit. The shearing and rolling are energy intensive and require complex and expensive extruding equipment. Use of extruding equipment makes the process less versatile as to modify the final characteristics of the product (such as viscosity) the equipment must be significantly and expensively modified (e.g., screw parameters such as blade pitch, size and shape must all be changed).

US 4861615 describes preparing chocolate mixtures in twin-screw extruders.

US 3663231 discloses a continuous conche used in traditional chocolate factories, the conche providing shear forces to the fat and solid mass during the dry and liquid phases.

US 4191786 describes a dry cooking method for making a chocolate powder mass, the mass is not liquefied.

None of these conches or replacements are satisfactory. Prior art chocolate liquefaction processes produce liquid chocolate of inconsistent viscosity varying periodically to give consecutively thick and thin masses. Such variability in viscosity makes the process less viable when the chocolate is further processed post conching in steps such as sieving, tempering and/or moulding and will impact the quality of final product.

As Beckett acknowledges, conching is poorly understood so the skilled person is unable to control the conch to best effect. Any attempt to replace or supplement the conch must be seen in this light. Conching is currently a compromise step without a good theoretical understanding so it cannot be easily improved as attempts to do so will always be subject to significant trial and error and modifications may still result in an inefficient process or device. The capital costs of replacing the large number of existing conches and their essential role in chocolate manufacturing also deter use of conch replacers. For all their problems conches are well-known and work (albeit inefficiently). Using any conch replacer is subject to unknown risks that during operation in a factory environment they may not work reliably or practically or that any improvements in efficiency seen for one chocolate composition in the laboratory may not be practically obtainable in a factory and/or with the wide variety of chocolate masses that must be processed industrially.

A skilled person is taught chocolate mass has a complex rheology and thus there are many variables that must be controlled to produce a chocolate product with desired viscosity as well as flavour properties. Current processes are hugely wasteful of energy, time and/or other resources (e.g. money or land) and cannot be readily adjusted to cope with inevitable variations in the fat based masses use in the process reliably to produce a consistent product in the optimal manner; and/or have poor control of the flavour of the resultant liquid mass.

There is still a need to provide a quick and/or energy efficient process to reduce the viscosity of a fat based mass (e.g. when liquefying chocolate). There is also a need for a means to control the liquefaction process reliably so the liquefied mass has consistent properties and for example so the process can be controlled to adjust for variations in the fat based mass. It would also be desirable to provide an improved and controlled method for liquefying a chocolate flake to an optimum viscosity with reduced or no drying, for example so material with a moisture content above 0.8% by weight can be processed. There also remains a need integrate the liquefaction step of the process better with other parts of chocolate production to provide improvements to the process overall that can be readily deployed industrially in a factory. It would also be desirable to operate conching or other liquefaction processes in a manner where the flavour of the resultant liquid can be controlled more flexibly and/or with a wide variety of different masses. It is an object of the present invention (and different aspects and embodiments thereof) to solve some or all of the many different problems described herein.

Therefore broadly in accordance with the invention there is provided a process for imparting specific work to a fat based edible material to reduce the viscosity of the material until the material reaches a pre-determined target viscosity ($\eta_{target}$), the process comprising the steps of:

(a) imparting a total amount of specific work $\overline{\omega}$ into the fat based edible material using an energy delivery means operated by one or more control parameter(s), where both the rate at which and total amount of specific work is imparted to the material is determined by the one or more control parameter(s); and
where the fat based material flows through the energy delivery means at an instant flow rate at a given moment in time 't' after the start of step (a) which flow is denoted by $Q_t$

(b) controlling the energy delivery means to reach a pre-determined target viscosity ($\eta_{target}$); where the rate of specific work imparted to the fat based material is determined by controlling one or more of the control parameter(s), such that the specific work imparted by the energy delivery means at a time t' after the start of step (a) satisfies the relationship given in equation 1:

$$\ln \eta_t = A - B \ln \overline{\omega}_t \quad (1)$$

where

(i) eta ($\eta_t$) denotes the viscosity at the time t' after the start of step (a) of the fat based material measured as plastic viscosity according to ICA method 46 (2000);
(ii) omega ($\overline{\omega}_t$) denotes total amount of specific work delivered to the fat based material after time t' since the start of step (a) calculated from the power and flow rate as given equation (2):

$$\overline{\omega}_t = \frac{P_t}{Q_t} \quad (2),$$

where: $P_t$ denotes the power (measured in kilowatts (kW)) imparted to the fat based material by the energy imparting means at the time t' after the start of step (a) $Q_t$ denotes the instant flow rate (measured in kg per hour (kg/h)) of the fat based material through the energy delivery means at the time t' after the start of step (a); and
(iii) A is from 0.5 to 0.7; and
(iv) B is from 0.3 to 0.6.

(c) stopping the energy delivery means after t = T from imparting specific work to the fat based material, the time T being determined from equations (1) and (2) and the pre-determined target viscosity ($\eta_{target}$).

T can be stated in any suitable units.
As used herein the terms "energy delivery means" and "energy imparting means" are synonymous and are used interchangeably.

When equations (such as (1) and/or (2)) are generally referred to herein it will be understood that unless the context clearly indicates otherwise, this also encompasses all embodiments of these equations such as those respectively labelled equations (1A) (1B) and/or (2A).

In one preferred embodiment of a process of the present invention allows for whole or partial elimination of use of inefficient conches for chocolate liquefaction. Process conditions can be monitored so that the chocolate mass can be continuously mixed and subject to suitable shear forces for example to convert flake into liquid chocolate mass in an optimal manner.

Usefully the mean (average) power delivered during the duration of steps (a) and (b) is denoted as $P_m$ which more usefully may be calculated from measurement of instant power $P_t$ used at a various different times 't' and/or by averaging the total energy imparted $\overline{\omega}$ over the total duration time 'T' of step (a).

In an embodiment, the average and/or instant power may preferably be a power of no more than 100 kW (low mechanical power), preferably less than 50kW, more preferably less than 15 kW. In an embodiment the the average and/or instant power may preferably be a power of greater or equal to 2.5 kW, greater or equal to 4.0 kW, for example between 2.5 kW and 100 kW.

Conveniently the mean (average) flow rate (measured in kg per hour (kg/h)) of the fat based material through the energy delivery means delivered during the duration of steps (a) and (b) is denoted as $Q_m$ which more conveniently may be calculated from measurement of instant flow rate $Q_t$ used at a various different times 't'

In an embodiment, the average and/or instant flow rate may preferably be between 90 and 6000 kg/hr, preferably between 200 kg/hr and 2000 kg/hr, more preferably between 500 kg/hr and 1500 kg/hr.

Advantageously the total amount of specific work required to be imparted to the fat based material during steps (a) and (b) to achieve the pre-determined target viscosity ($\eta_{target}$) is denoted by $\overline{\omega}$ and more advantageously $\overline{\omega}$ may be calculated from equation (1A):

$$\ln \eta_{target} = A - B \ln \varpi \quad (1A)$$

Helpfully the total specific work $\overline{\omega}$ imparted to the fat based material during steps (a) and (b) may also be given by equation (2A):

$$\varpi = \frac{P_m}{Q_m} \qquad (2A)$$

Preferably the time T (which is the duration over which the energy imparting means imparts specific work $\overline{\omega}$ into the fat based edible material in step (a)) can be determined from the values $P_m$ and/or $Q_m$ alone and no other factors.

In one embodiment of the invention the duration (T) for step (a) is determined in advance before starting step (a) by calculating a value for both $P_m$ or $Q_m$ corresponding to $\overline{\omega}$ and $\eta_{target}$ and satisfying both equations (1A) and (2A) and more preferably these parameters $P_m$ and $Q_m$ are both adjusted in parallel so that T is at a minimum (i.e. step (a) is performed for the shortest time to reach the target viscosity ($\eta_{target}$).

In another embodiment of the invention one of $P_m$ or $Q_m$ may be fixed and the other of these parameters may be adjusted using the control means during operation of step (a) to achieve that value of $\overline{\omega}$ corresponding to $\eta_{target}$ calculated from equation (1A). This may make the calculation and operation and control of the energy delivery means simpler (for example require less sensors or control means may be used as only one of the mass flow rate or power to the energy deliver means are adjusted) but this may result in a duration (T) for step (a) which is not the shortest that could be achieved.

In a yet other embodiment of the invention if one of the parameters herein (e.g. power P or flow Q or time T) cannot be cannot be easily adjusted or controlled then the other(s) can be adjusted instantaneously and/or over the duration of step (a) to satisfy any of equations (1) and/or (2) herein.

In the process of the present invention as the material flows though the energy delivery means is preferred to have a residence time therein of from 1 hour to 72 hours, more preferably from 2 to 48 hours, even more preferably from 5 to 30 hours, most preferably from 10 to 24 hours.

Usefully the residence time also corresponds to time T for the duration of step (a) in which case it will be appreciated that to achieve a desired residence time the mean flow $Q_m$ will be set to satisfy equation (1) and optionally equation (2) for example by adjusting the mean power $P_m$. However if the value required for mean flow $Q_m$ is outside that possible for a certain apparatus (e.g. given constraints on power and/or flow available) then it will be understood that that residence time cannot be achieved when following the process of the invention.

The process of the present invention may be a batch process in which case it is preferred that the apparatus used comprises a receiving vessel to which a batch of the fat based mass to be liquefied in a process of the invention is added. It is also preferred that apparatus for use in a batch process of the invention has an output conduit fluidly connected to an output container which can hold the batch of liquid mass after processing. It is also preferred that apparatus for use in a batch process of the invention has an output conduit fluidly connected to an output container which can hold the batch of liquid mass after processing.

However the process of the present invention where viscosity reduction is controlled according to the model described herein also allows the possibly of a continuous or semi-batch process as the process may reliably and predictably achieve a desired viscosity without over-working of the edible mass. Thus in a continuous process of the invention the process can be operated so in step (a) the edible mass is resident in processing chamber for the shortest period necessary for the energy delivery means to impart the minimum energy required to achieve the desired viscosity. Thus the apparatus can be readily designed and energy delivery means be operated so that there is a continuous flow of mass through the apparatus.

Another preferred embodiment of the present invention provides a process for imparting specific work into a solid or semi-solid chocolate or compound mass to liquefy the mass so the viscosity of the mass is reduced until it reaches a desired liquid viscosity, the process comprising the steps of:

(a') imparting specific work into the mass using a mixer and/or extruder operated by one or more control parameter(s), the rate at which specific work is imparted to the mass being determined by the one or more control parameter(s);

(b') controlling the mixer and/or extruder to impart specific work into the mass until the viscosity of the mass reaches the desired liquid viscosity,

where the rate of specific work imparted to the mass is determined by controlling one or more of the control parameter(s) for the mixer, such that the specific work imparted by mixer satisfies the relationship given in Equation (1B)

$$\ln \eta = 0.5919 - 0.4268 \ln \omega \qquad (1B)$$

(i) eta ($\eta$) denotes a viscosity ratio calculated from:

the initial viscosity of mass just before the step (a) denoted as eta$_0$ ($\eta_0$); and
the target viscosity of the mass after liquefaction has been completed denoted eta$_{target}$ ($\eta_{target}$),
the ratio being given by equation (3B)

$$\eta = \frac{\eta_0}{\eta_{target}} \qquad (3B)$$

where the viscosities eta$_0$ ($\eta_0$) and eta$_{target}$ ($\eta_{target}$) are both measured under standard conditions in the same method and same units (preferably at temp = 30°C in method Y in units of Pa.s)

(ii) omega ($\omega$) denotes a ratio of specific work calculated from:

the theoretical specific work imparted to the mass after step (a) assuming the mixer operates at 100% efficiency is denoted as omega$_{theory}$ ($\omega_{theory}$); and
the actual specific work imparted to the mass after completion of the mixing step (a') is denoted as omega$_{actual}$ ($\omega_{actual}$);
the ratio of specific work being given by equation (4B):

$$\omega = \frac{\omega_{theory}}{\omega_{actual}} \qquad (4B)$$

where the specific energies omega$_{theory}$ ($\omega_{theory}$) and omega$_{actual}$ ($\omega_{actual}$) are both measured under standard conditions in the same method and in units of kWh per kilogram of material.

Usefully in the first embodiment of the invention:

$\eta_{target}$ is less than 6 Pas; and

$\omega_{actual}$ is greater than 61300 kWh / kg).

Conveniently in the first embodiment of the invention the mixer in mixing step (a') the control parameters are set and/or adjusted during the mixing such that the mixer applies a continuous shear force to the mass to impart specific work $\omega$ to the mass to reduce the viscosity $\eta$ at a rate given by Equation (1B).

Advantageously the process of the first embodiment is operated such that the average flow rate of the edible mass through the processing chamber of the invention is at least 1 kg per minute and more advantageously is no more than 100 kg per minute. Even more advantageously the average flow rate is from 10 to 80 kg per minute, most advantageously from 20 to 70 kg per minute.

Useful control parameters are the temperature experienced by the edible mass within the processing chamber (optionally controlled by operation of suitable heating and/or cooling means); more useful control parameters are for a mixer: its mixer speed, power input and/or time of operation; and/or for an extruder: screw speed, power input; and/or residence time of material in the extruder.

The process of the invention controlled using the relationships described herein thus usefully provides a means to optimize the power, flow and/or duration of step (a), more usefully to optimize and/or minimize many factors of a process of the invention in addition to its duration where for example these all may have different and varying impact on other factors such as cost. Some examples of these factors may include: total energy used, amount of material liquefied; time taken, total cost of process and/or any combinations thereof, e.g. to find an optimum compromise in operation of the process when a plurality of such factors are considered together.

For example energy costs, operational costs and/or material costs all vary from time to time or place to place (and may even vary during operation of the same process). Thus the most economical way to operate the process will be unlikely to be fixed or consistent every time even if the same process operated on the same material in the same assets at the same location. Thus a yet other embodiment of the present invention optionally provides an opportunity to optimize, reduce and/or tailor the costs of liquefaction of fat based edible masses (such as chocolate) to the set of operational circumstances of a given place, time and/or product to an greater extent than has been possible before which provides opportunities for new processes having cost savings compared to prior art conching processes and/or allows existing known conching processes to be operated more cost effectively that they are currently being.

If $\eta_{target}$ corresponds to a liquid viscosity then T will be the time taken to achieve liquefaction of the fat-based material.

The initial fat based material that can be liquefied according to the method of the invention includes, more particularly, powdery or pasty mixtures traditionally obtained after refining or milling of sugar solids and/or cocoa solids and/or milk solids with fat in order to reduce the particle size of the solids in the mixture. The fat may include cocoa butter, chocolate substitutes containing direct cocoa butter replacements, stearines, coconut oil, palm oil, butter or any mixtures thereof. The solids may include cocoa solids, sugar, sugar alcohols, sugar substitutes, milk such as skimmed milk or full cream milk powder, vegetable solids and any combinations thereof. After homogenization and refining the initial fat based material may result in flakes, powder or granules of differing particle size but more preferably of an average particle size, in particular, of less than 50 microns, even preferably less than 30 microns so that the final material is not gritty in the mouth. The proportion of fat may depend on the product to be liquefied.

In one embodiment of the process of the present invention additives such as emulsifiers may be added in small amounts at different stages (e.g. before and/or during conching) to help further reduce viscosity for example lecithin, polyglycerol polyricinoleate (PGPR), ammonium phosphatide and/or others. However in a preferred embodiment such viscosity reducing aids are not added and viscosity is reduced by control of the energy delivery means alone. Such additives may impact other properties of the mass such as flavour and texture or may be incompatible with other ingredients. It is one optional advantage of the present invention that the recipe of the fat based material need not be changed during or for conching.

Optionally in an embodiment of the process of the present invention, the process proceeds in the absence of a separate moisture reduction step.

It is very surprising that the notwithstanding the believed complexity in the rheology of fat based masses such as chocolate the applicant has found that the simple predictive model of equation (1) which relates the amount of specific work imparted to a fat based mass to viscosity can be used to reliably and consistently predict the viscosity of the mass during liquefaction to allow liquefaction to be achieved efficiently whilst minimizing or eliminating overworking of the mass. It has also been found that using the model may optionally allow operation of a process for liquefaction of chocolate mass having moisture levels much higher than in masses typically liquefied before and production of liquid chocolate having a higher moisture content (> 0.8% by weight).

In one embodiment of the invention surprisingly can provide liquid fat based edible material with a high moisture content (e.g. from 1.3 to 5.0% by weight) as when the wetter material is liquefied according to the process of the invention low target viscosities can still be achieved (e.g. from 2 to 6 Pa.s) in a reasonable amount of time (e.g. depending on the material from 6 to 24 hours). This is comparable to viscosities achieved by conching for a similar period much drier (moisture content of 0.8% or less) but otherwise similar fat based edible material. From the common general knowledge it is unexpected that fat based material with high moisture content can be conched to provide adequate viscosity reduction at all or in a reasonable amount of time.

In one useful embodiment the process of the invention can be used to liquefy fat based materials by controlling only the apparatus such as the energy delivery means (for example by adjusting speed and/or power of a mixer) in response to a measured viscosity. The ingredients used to prepare the fat based material may thus optionally remain unchanged (constant starting recipe) and further additives (such as emulsifiers) need not be added to the material during the process to achieve or speed up liquefaction of the fat based material. Components of the fat based material may still be lost during liquefaction (e.g. by evaporation) so the composition of the final product may be different from the composition at the start of the process but preferably by control of the energy delivery means it is not required to add further ingredients solely for the purpose of assisting liquefaction.

The model given by equation (1) in the process of the invention can be used to predict and control viscosity at any point or multiple points or continuously during the performance of steps (a) and/or (b) as the viscosity is reduced to achieve the target viscosity. Preferred target viscosities for chocolate lie in the range 2 to 6 Pa.s.

For example, the control parameters can be used to control operation of the energy delivery such that $\bar{\omega}$ represents the target viscosity desired for the liquid chocolate mass and thus the process will stop the energy delivery means promptly and prevent or reduce overwork of the fat based material. Alternatively or as well the control parameters can be used to control operation of the energy delivery means such that $\bar{\omega}$ represents one or more intermediate viscosities between that of the initial material before step (a) and the target viscosity (where the intermediate viscosities will be higher than the target) in which case the process is operated so that the relationship given by equation (1) is maintained as far as possible throughout the process (subject to the rate at which viscosity measurements are taken). If the measurement and generation of control parameters is substantially continuous then preferably equation (1) will be satisfied throughout the operation of steps (a) and (b) of the process. Without being bound by any theory it is believed that continuous monitoring and feedback is advantageous as following equation (1) at all times reduces viscosity of the fat based material in the most energy and/or time efficient manner.

Imparting work in step (a) and control of the energy delivery means in step (b) may be simultaneous (e.g. as part of a feedback loop where (a) and (b) are the same step) which is preferred and more preferably the control parameters are generated frequently (most preferably continuously) so that the energy delivery means performs optimally throughout the process. However in a less preferred embodiment steps (a) and (b) may also be sequential where step (a) is performed then optionally paused or stopped (for example to provide time for an off-line analysis or measurement) and then the control of energy delivery means is effected in step (b) and then if necessary step (a) is restarted. In this embodiment, steps (a) then (b) may be repeated as many times as necessary until the desired target viscosity for the fat based material is achieved in a step-wise rather than continuous manner.

Control of the energy delivery means may be achieved in different ways. For example, in one embodiment of the invention step (b) uses one or more sensing means optionally combined with one or control means.

The sensing means may comprise sensors that measure input parameters that may directly and/or indirectly be used to determine: the viscosity of the fat based edible material and the specific and/or theoretical work delivered by the energy delivery means to the fat based material.

The input parameters may be measured from the fat based material, energy delivery means, related apparatus used in the process of the invention and/or the environment in which the apparatus is used (e.g. ambient temperature and/or pressure). The input parameter(s) alone or in combination with other parameters may then be, or be used indirectly or directly to calculate and/or determine one or more other properties and/or parameters that are useful and/or used in the process of the present invention, such as those selected from the group consisting of:
theoretical work omega$_{theory}$ ($\omega_{theory}$); work at time 't' omega$_t$ ($\omega_t$); target viscosity eta$_{target}$ ($\eta_{target}$); initial viscosity eta$_0$ ($\eta_0$); and/or viscosity at time 't' eta$_t$ ($\eta_t$).

The control means may operate on the energy delivery means using control parameters derived directly and/or indirectly from the input parameters (e.g. parameters calculated from the input parameters) in real time or at preselected time intervals (e.g. when the input parameters are sampled) during the process of the invention.

The energy delivery means may be controlled during step (b) (and optionally step (a) where these steps are simultaneous) in response to changes in the input parameters in a manner that the equation (1) will be satisfied.

In a preferred embodiment of the process of the invention the response of the control means (that operates to control the energy delivery means) to changes in input parameters may be immediate and instant if the control means and sensing means are in constant contact so that that equation (1) will be satisfied.

In another embodiment of the process of the invention the response to such changes in input parameters may be delayed or deferred if the control means and sensing means are only in contact intermittently (for example at predetermined intervals during the process or using batch sampling and analysis of the material) in which case whilst equation (1) will be satisfied overall at the end of the process, at any instant during the process it will be understood that it is possible the viscosity and work parameters may stray somewhat from the ideal values given by equation (1) before they can be brought back into a range governed by equation (1) by the control means. The smaller the interval between when data or samples are taken the less likely the fat based material will stray out of the desired range of parameters and the more advantageous control of the overall process will be (e.g. achieving more energy efficiency or cost savings etc.).

It is also possible that sensing means denotes that there is an initial analysis of the fat based material and/or energy delivery means and this initial analysis is used to also set the control means (a) to an initial setting such that the energy delivery means then operates at these settings throughout the process unchanged to achieve the reduction in viscosity according to the relationships given in equation (1) herein.

The sensors may measure the input parameters in real time or at preselected time intervals during the process of the invention. Sensors may comprise physical devices located in or with the equipment used to perform the process of the invention preferably so the control occurs in real time. Preferably the sensors are located as close as possible to the energy delivery means (e.g. in a processing chamber where the energy delivery means imparts work to the fat based material) so the data is as accurate as possible and/or to minimize errors due to extraneous factors such as energy losses etc.).

Sensing means may also encompass process where representative samples of the fat based edible material are collected at different times during the process, which samples are analyzed separately and the results are then fed back manually into the process of the invention. This quantized material sampling process may be more appropriate for a batch type process where steps (a) and (b) are not simultaneous and the process step (a) stops and restarts after adjustment of the setting of the energy delivery means.

In other embodiment of the invention steps (a) and (b) comprise an automatic feedback loop in which the instant amount of work delivered to the fat based material by the energy delivery means is controlled by a control means, where the control means is in direct or indirect connection with the sensing means so control parameters are generated directly and/or indirectly in response to changes in the input parameters so that equation (1) is satisfied.

As used herein 'A' is a constant related to the viscosity (Pa.s). Without wishing to be bound by any theory it is believed that when specific work tends to 1.0 ($\overline{\omega} \rightarrow 1.0$) then 'B' can represent dimensionless constant related to the rate of viscosity reduction per applied specific work ($Ln\ \eta\ /\ Ln\ \overline{\omega}$).

The constant denoted herein by 'A' is from 0.5 to 0.7, preferably from 0.55 to 0.65, more preferably from 0.57 to 0.61, even more preferably from 0.580 to 0.605, most preferably from 0.5900 to 0.6000, for example 0.592 to 3 significant figures, such as 0.5919 to 4 significant figures.

The constant denoted herein by 'B' is from 0.3 to 0.6, preferably from 0.35 to 0.55, more preferably from 0.37 to 0.50, even more preferably from 0.410 to 0.440, most preferably from 0.4200 to 0.4300, for example 0.427 to 3 significant figures such as 0.4268 to 4 significant figures.

The relationship shown in equation (1) has been found to be valid over a wide range of fat based masses having different compositions and thus provides an effective means for optimal control of a process to liquefy fat based masses for example by setting that work need to generate a viscosity during the liquefaction process. The process parameters that are needed to be controlled can be set before liquefaction, e.g. by presetting a constant or preprogrammed varied mixer speed that is pre-determined from equation (1) to deliver that specific work that will achieve a certain final viscosity in the product in a given time. The monitoring can also be in real time with feedback to control the energy delivery means (e.g. control of mixer speed or extrusion rate) to ensure these parameters remain within this optimal relationship - i.e. the specific work added at any moment during the process can be adjusted in real time to match the instant measured viscosity of the output mass so that equation (1) is satisfied. In one embodiment controlling the process as described herein ensures the least amount of energy needed to liquefy the mass is used.

This model described herein (in equations (1) and/or (2) also provides a means to select, design and/or use devices to liquefy fat based masses such chocolate which can be more efficient than traditional conches. It also provides a means to improve operation of known conches and/or other fat liquefying devices to avoid over-work of the fat based mass. The process can be stopped once a desired viscosity is reached and/or at any point in the process the energy input will be matched so that the optimum amount of energy is added to reduce the chances of instantaneously over-working the fat. Using the model described herein this can be easily predicted in advance by measuring the work added.

In another embodiment measurement or calculation of one parameter -specific work added to the fat based mass (which can be further determined from simple parameters in a mixing step such as time and shear rate of a mixer and/or the power input to the mixer) - can be used to determine (and thus control) when a given target viscosity is reached. At this point further liquefaction can be prevented (e.g. the conch or other mixer stopped). This avoids the need for complex measurement of viscosity which can be difficult to do in real time. This allows for the possibility that liquefaction of a fat based mass may be a batch, semi batch process or continuous process. In a semi-batch process each batch may be generated automatically after the previous one. In a continuous process energy may be delivered to the mass in an energy delivery zone through which the mass moves at the correct rate to satisfy equation (1) to generate continuously a resultant product that consistently has the target viscosity generated in the most energy efficient manner.

In a still other embodiment of the process the invention also allows for as well or in an alternative the process to be operated in the most time efficient manner i.e. so the process can be operated to provide the desired total specific work to the fat based mass at a rate to achieve the target viscosity in the shortest (or a target) time. It will be understood that to impart a higher specific energy to a fat mass in a given time will initially require a higher power from the energy delivery means. However as the power increases the energy delivery means may impart energy to the mass at decreasing efficiency (i.e. a higher percentage of the total power available will be lost to the environment and not imparted to the fat mass). Thus there will be a limit where a further increase in total power of the energy delivery means will not impart further energy to the mass due to these efficiency losses, i.e. there will be a minimum time required to achieve any target viscosity whatever energy delivery means is used at whatever power. However the model of the invention will allow this theoretical minimum time to be calculated and the process to be operated to achieve this shortest time (or as close as possible to it given other limiting factors).

In a yet other embodiment of the process the invention also allows for as well or in an alternative the liquefaction process of the invention to be operated with its parameters set and/or adjusted to operate in a most or a more cost efficient manner i.e. so the process can be operated to provide the desired total specific work to the fat based mass at a rate to achieve the target viscosity in the manner which is most cost effective (or matches a target cost) considered either as the cost of the liquefaction step in isolation and/or as part of an overall cost of a multi-step process of which liquefaction forms one part. It will be appreciated that cost is a function of many different variables such as cost of energy supplied to the energy delivery means, cost of the raw materials and/or cost of throughput (related to the cost per unit time to operate the process) amongst other parameters. The model of the present invention provides a tool that optionally combined with other models and known mathematical tools (such as statistical models, finite element analysis and/or neural nets) with other parts of the process that can be used to minimize the total cost of operation of the process of the present invention. Cost may vary according to fluctuations in variables which in some cases can occur in real time. However typically the process of the invention would be optimized to operate a minimum cost for each batch run or campaign where chocolate is liquefied as parameters that impact cost are less likely to change frequently or in real time.

To generate the control parameters used in step (b) to control and/or adjust the energy delivery means in step (a) any suitable mathematical process model can be used in conjunction with equation (1) (and optionally equations (2) and/or (3) and/or (4) herein) and/or the input parameters herein. Such models may optionally be calculated or generated by a computer and may include suitable mathematical techniques or models such as: neural networks, statistical models and/or finite element models that predict in whole or in part one or more of the control parameters. These mathematical models may be used in conjunction with advanced controllers, software and/or algorithms to calculate and/or predict optimal settings for the control means used in the process of the present invention. Thus one or more of control parameters that are used to operate the control means may be partially or wholly derived from empirical data (e.g. using one or more input parameters from sensing means) and partially or wholly predicted by mathematical models (e.g. where the control parameters are predicted from theory). The models may or may not be adjusted in the light of experience (so called adaptive or learning models such as neural networks where input parameters are fed into the model to generate a revised and improved model for later use, the steps being iterative and/or repeated). The models may be used separately from the apparatus used in the invention to generate control parameters in a process of the invention that are manually fed or inputted into the control means (for example by a human operator) or the models may be integrated into the control means and/or sensing means of the apparatus used in the invention so the control means (and hence energy delivery means) is operated automatically and substantially without any human intervention.

In the present invention the energy imparted to the material is in a first approximation assumed to be the same or at least 90% of the energy output of the energy delivery means (such as a mixer).

Preferably reducing the viscosity of a fat based edible material where step (a) the work imparting means comprises a mixing step using a mixing means where the rate of mixing is controlled by one or more of the control parameters.

Optionally the viscosity of fat based edible material is reduced until it reaches a target viscosity of from 2 to 6 Pa.s and/or a yield of from 4 to 10 Pa.

The viscosity of the fat based edible material of the invention and/or made according to the process of the invention may be reduced without the need for a moisture reduction step before, during and/or after steps (a) and/or (b) of the process of the invention.

The energy imparting means may usefully be controlled by setting and/or adjusting one or more control parameters to ensure the rate of specific work imparted to the fat based material satisfies equation (1) during step (a).

More usefully the energy imparting means is controlled by means of initial calculation of the rate of specific work using equation (1) and setting one or more control parameters such that the initial rate of the energy imparting means remains substantially constant throughout step (a).

Conveniently the rate of specific work imparted to the fat based material and/or the viscosity of the fat based material are monitored during step (a) and these values are fed into an automatic control means such that one or more of the control parameters are adjusted to operate the energy imparting means to ensure the rate of specific work imparted to the fat based material satisfies equation (1) throughout step (a).

The control means described herein may comprise one or more sensors and/or control units operated by a computer.

The energy delivery means (such as a mixer or extruder) may be controlled by one or more control parameters generated by one or more models that use equation (1) (and/or equations (2), (3) and/or (4) herein) to calculate indirectly or directly the control parameters.

Preferably in the process of the invention the fat based edible material is a fat based confectionery material, more preferably a choco-material more preferably chocolate mass or compound mass.

The process of the invention can also be operated so that the control parameters are set and/or adjusted using equation (1) to optimize other property such as one or more selected from: energy efficiency of the process; time taken by process, throughput of the material through the process; and/or cost of operating the process.

In a further aspect of the invention, an apparatus suitable for use in a process of the present invention comprises:

i) optionally a vessel suitable for receiving a fat based edible material;

ii) an input conduit optionally in fluid connection with the receiving vessel where present, the conduit being suitable for transport of the fat based material to a processing chamber;

iii) a processing chamber comprising an energy delivery means, where the energy delivery means is capable of imparting specific work into the fat based edible material within the chamber to reduce the viscosity of the material;

iv) optionally an output conduit in fluid connection with the processing chamber so the reduced viscosity material can be transported through the output conduit to be collected for subsequent use and/or to other apparatus for further processing; characterized in that:

A) the input conduit and/or processing chamber (and optionally the receiving vessel where present) comprise one or more sensors that measure input parameters, where the input parameters are capable of determining directly and/or indirectly: the viscosity of the fat based edible material; and/or the specific and/or theoretical work delivered by the energy delivery means to the fat based material; and

B) the energy delivery means is controllable by control means operated on by control parameters in a feedback loop to control the instant amount of work delivered to the fat based material, where the control means and sensing means are in direct or indirect connection so control parameters are capable of being generated directly and/or indirectly in response to changes in the input parameters to satisfy equation (1).

Apparatus used in the invention for use in a continuous process may not require a receiving vessel (which is optional). The apparatus may be located in line as part of a continuous process of the edible mass having processing steps before and after. For example the edible mass can be transported (e.g. by pumping) directly and continuously from another apparatus to flow through the input conduit and the processing chamber and then the reduced viscosity mass can be transporting using the output conduit direct to another apparatus.

In another more preferred embodiment the input conduit and processing chamber are the same (i.e. the mass is directly added to the processing chamber).

The residence time and/or flow rate of the mass in the input conduit and/or processing chambers may comprise (directly or indirectly) one or more of the control parameters which are adjusted optionally together with other control parameters using the model described herein in a manner such that desired viscosity of the mass is achieved reliably and predictably as the mass passes continuously through the apparatus. Other useful control parameters for use in a continuous process of the present invention comprise the path length of mass and/or volume of mass as it is travels through the processing chamber whilst the energy delivery means imparts specific energy thereto.

Path lengths and volumes may be adjustable by mechanical means (e.g. by adjusting actual conduit length and/or diameter and/or chamber volume (e.g. by sliding walls and telescopic adjustment of pipe length, use of adjustable bellows and the like). Alternatively inert food safe material can be added or removed from the apparatus to slow or speed up the flow of material there through.

A further preferred embodiment of the present invention utilises an apparatus comprising:

i) a vessel suitable for receiving a solid or semi-solid chocolate or compound mass;

ii) an input conduit in fluid connection with the receiving vessel, the conduit being suitable for transport of the solid or semi-solid chocolate or compound mass to a processing chamber;

iii) a processing chamber comprising a mixer and/or extruder capable of imparting specific work into the solid or semi-solid chocolate or compound mass within the chamber to reduce the viscosity of the mass until it is liquid having a target viscosity;

iv) an output conduit in fluid connection with the processing chamber so the liquid chocolate or compound can be transported through the output conduit to be collected for subsequent use and/or to other apparatus for further processing;
characterized in that:

A) the processing chamber comprises one or more sensors that measure input parameters, where the input parameters are capable of determining directly and/or indirectly: the viscosity of chocolate or compound mass; and/or the specific and/or theoretical work delivered by the mixer and/or extruder to mass; and

B) the mixer and/or extruder is controllable by control means operated on by control parameters in a feedback loop to control the instant amount of work delivered to the chocolate or compound mass, where the control means and sensing means are in direct or indirect connection so control parameters are capable of being generated directly and/or indirectly in response to changes in the input parameters in a manner that the equation (1) (and optionally (2)) in the process of the present invention is satisfied.

The energy delivery means used in the present invention may be a conventional mixer operated as described herein or may be any other device (such as an extruder) that can deliver sufficient energy to the mass to satisfy equation (1). Suitable mixers may be an in-line mixer such as a pin mixer or a batch mixer such as a conch or colloid mill In the process of the invention reaction flavours that are normally created during conching may also be achieved by other more efficient methods such as by making a chocolate crumb that is a pre-treatment that consists of making an intermediary product useful in the production of milk chocolate products to prevent rancidity and provide special milk flavours to these products. Such methods are described, for instance, EP0940085. Other possible treatments for developing flavours are reaction processes such as the liquid milk powder-compounded process in a column that is or has been available commercially from companies such as Petzomat. Removing of unwanted volatiles can also be carried out more efficiently than by conching by treating the cocoa mass such by passing the chocolate mass in thin stripping columns as described in Beckett. Furthermore, for some products, such as white chocolate or compounds made from cocoa powder, flavour reactions and flavour removal only play a small role and therefore do not require additional flavour related treatments.

Preferred energy delivery means for use in the apparatus and/or process of the invention comprise one or more devices (such as mixer(s) and/or extruder(s)) capable of delivering high shear (for example $\geq 200,000$ s$^{-1}$) to the fat based material, such device also being referred to herein as high shear devices (e.g. high shear mixers and/or high shear extruders). Usefully high shear devices may be controlled as described herein in the process of the invention to deliver to the fat based material a shear greater than or equal to 200,000 reciprocal seconds

All the values described herein as potential parameters for operating the process of the invention are still subject to control in a process of the invention to a satisfy the equations (1) and/or (2) herein and if there is any conflict with the values below and values determined by these equations, the latter will prevail.

As used herein the term high shear usefully denotes application of shear forces to a material such that the minimum shear imparted to the material is greater than or equal to 200,000 reciprocal seconds. A more useful degree of high shear may be that used in conching and/or equivalent process steps such as a shear of from 200,000s$^{-1}$ to 1,000,000s$^{-1}$, even more usefully from 300,000s$^{-1}$ to 800,000s$^{-1}$, most usefully from 400,000s$^{-1}$ to 600,000s$^{-1}$.

The total amount of mechanical energy imparted to a material in the process of the invention (for example when the energy delivery means is a high shear mixer) may be greater than 100 kJ, preferably $\geq$ 150 kJ, more preferably $\geq$ 200 kJ, most preferably $\geq$ 250 kJ based on a flow rate of material through the mixer of 50 kg per minute. Typically the flow rate of fat based material through a high shear mixer may be from 1.5 to 100 kg per minute. However in accordance with the present invention the amounts of energy supplied to the energy delivery means will be adjusted accordingly for a given flow rate and energy efficiency so the total energy imparted to the material is consistent with equation (1).

Optionally the degree of work that may be imparted in steps (a) and (b) of the invention is performed by operating an energy delivery means (such as a high shear mixer) at a power of greater than 100 kW (high mechanical power), preferably $\geq$ 150kW, more preferably $\geq$ 200 kW per kilogram of material provide these values are also consistent with equation (1).

In one embodiment in the apparatus used in the invention the energy delivery means may comprise a high shear mixer that comprises a rotatable shaft with paddles or the like deposed thereon to achieve mixing, to deliver substantially amounts of high shear to the fat based material. Provided that it is also consistent with equation (1) in this embodiment the high shear mixer used in the process of the invention preferably may be operated at rotational speed of greater than 300 rpm, more preferably $\geq$ 400 rpm, even more preferably $\geq$ 500 rpm, most preferably $\geq$ 600 rpm. Usefully in the process of the present invention the rotor in such a high shear mixer is operated at a rotational speed of from 300 to 1000 rpm, more preferably from 400 to 800 rpm, even more preferably from 400 to 700 rpm, and most preferably 500 to 600 rpm provide such values are also consistent with equation (1).

Alternatively, the energy delivery means may be operated at rotational speed of greater than 50 rpm, more preferably $\geq$ 75 rpm, for example $\geq$ 100 rpm, or $\geq$ 200 rpm. Usefully in the process of the present invention the rotor in such a high shear mixer is operated at a rotational speed of from 50 to 400 rpm, more preferably from 75 to 350 rpm, for example from 75 to 275 rpm, or from 100 to 300 rpm provide such values are also consistent with equation (1).

Suitable mixers that may be used as the energy delivery means in the present invention are described in Beckett (see for example section 9.2.3) and may be any equipment known in the art that can apply one or both of the different types of mixing described therein: (i) shear mixing, where the chocolate is between two surfaces moving relatively to one another; and/or (ii) elongational mixing, in which the material is squeezed through or spread over a surface. Non-limiting examples of suitable equipment to achieve such mixing which is suitable for use in the present invention is described in Beckett section 9.4 (which section is incorporated herein by reference especially the Figures in that section). The energy delivery means used in the invention herein may be preferably selected from any of the group consisting of: batch conches; horizontally stirred rotary conches (such as the Carle-Montanari Clover conch and/or; the Petzholdt model PIV-HLC conch) vertically stirred rotary conches (such as the Thouet DRC conch available commercially from Thouet KG Maschinenbau and/or the Frisse conch available commercially from Richard Frisse GmbH); high-speed mixers as conches (such as that manufactured by Lipp Mischtechnik of Germany); single shaft conches (such as the Frisse ELK conch available commercially from Bühler); continuous conches (such as those using the Thouet continuous process available commercially from the Tourell Conche Manufacturing Company and/or those using the Frisse continuous process); short dwell time continuous conches; continuous HCC conches (such as those from the Petzholdt Heidenauer HCC range); cocoa mass and/or liquor treatment devices (such as those using any of the Petzomat treatment (such as the Petzomat mass roasting system and/or Petzomat STC treatment); the Convap treatment and/or the Carle-Montanari process); liquefiers (such as the Petzholdt high-intensity short-dwell PIV 4000 conch; and/or Petzholdt PIV intensive treatment unit); in-line high-shear devices (such as those available commercially from Lipp Mischtechnik and/or the conch available commercially from Carle-Montanari Homega; and/or the equipment available commercially from Lehmann that couples in-line liquefiers with ball mills); combined grinding and conching machines; recirculating ball mill systems (such as those that use the any of: the continuous Lehmann process; the Wiener chocolate making plant and/or Macintyre system (such as the Low & Duff Macintyre refiner / conch); any of the equipment available commercially under any of the trade designations and/or suppliers in the following list (e.g. as used in Examples 1 to 4 herein): the conveying twin-screw mixer (optionally of 5 inch diameter available commercially from Readco); and/or any suitable combinations and/or mixtures thereof and/or parts and/or components thereof.

None of the prior art mixers referred to herein describe or suggest optimum operating conditions under which the mixers may be used, operated and/or controlled that would be relevant for the present invention or would overcome the technical prejudice described earlier. For example there is no teaching in any of these documents that might lead a skilled person directly or indirectly to appreciate that chocolate might be liquefied by controlling the specific parameters given herein in the specific manner described herein.

A yet other aspect of the present invention utilises a control device suitable for use in conjunction with at least one of: a process of the present invention; an apparatus of the present invention; and/or an apparatus capable of being used in at least one step of a process of the present invention; where the control device comprises at least one unit separate and/or separable from the apparatus of and/or used with the process of the invention; where the apparatus comprises: at least one energy delivery means for imparting an amount of specific work into a fat based edible material to reduce the viscosity of the fat based edible material; and at least one sensor means associated with the apparatus to generate at least one input parameter therefrom; characterized in that the control means comprises:

at least one input interface capable of being connected with the at least one sensor means to receive at least one input parameter therefrom; and
at least one output interface capable of being connected with the at least one energy delivery means to send at least one control parameter thereto; where during operation of the process of invention; and/or apparatus of and/or used in the invention, the control means is capable of:

receiving via the at least one input interface the at least one input parameter from the at least one sensor means; using the at least one input parameter and equation (1) to calculate the at least one control parameter; and transmitting the at least one control parameter via the at least one output interface to the at least one energy delivery means to control the at least one energy delivery means to satisfy equation (1).

In one embodiment, the control device utilised in the invention the input and/or output interfaces may comprise a physical connection between the control device and one or more of the respective sensor means and/or energy imparting means for example via direct mechanical links and/or electrical cables thereto.

In another embodiment, the control device utilized in the invention the input and/or output interfaces may comprise a remote connection (for example wireless, infrared and/or web based interface) where there is no physical connected between the control device and one or more of the respective sensor means and/or energy imparting means.

In a preferred embodiment, the control device utilized in the invention, the control device is a single unit (e.g. held in one box) which may be wired to the apparatus and/or may be a remote control for the apparatus. The control device may optionally comprise the at least one sensors which may be associated with the process of the invention and/or the apparatus of and/or used in the invention. Alternatively the control device utilized in the invention may be absent sensors and connect (via the at least one input interface) with sensors that are already present on and/or are associated with the apparatus of and/or used in the invention. Usefully the control device utilized in the invention may comprise solid state hardware (such as integrated circuits and/or microprocessors) having algorithms integral thereto (as hardware, software and/or firmware) such that the control unit can perform as described herein by receiving at least one input parameter and transmitting at least one suitable control parameter.

A still yet other aspect of the present invention provides use of a control device of the invention for the purpose of controlling viscosity in a process of the present invention. Preferably the control devices utilized in the invention are used in conjunction with an apparatus used in the invention. However alternatively or as well the control devices of the invention may be used in conjunction with an apparatus suitable for use in a process of the present invention, which may be already known (such as a traditional conch or the like), and more preferably the control device can then be used to operate and/or control such known apparatus in a more optimal manner than was done before.

Also provided is a method for modifying an apparatus comprising an energy delivery means capable of reducing the viscosity of a fat based edible material, the method comprising the steps of:

a) providing a control device of the invention;
b) optionally adding sensory means to the apparatus;
c) associating the control device to operate the energy delivery means in accordance with equation (1) during a process for reducing the viscosity of a fat based edible material.

Preferably in step (c) of the method the process referred to is a process of the present invention.

Usefully in step (c) of the method the process uses input parameters from the sensory means to generate control parameters for the energy delivery means.

Conveniently after modification in accordance with the method of the invention the apparatus comprises an apparatus used in the invention, more conveniently this being due to the modification for example where the apparatus before modification is a conventional conch.

Alternatively the apparatus before modification already comprises an apparatus used in the invention already suitable for use in a process of the invention in which case the method is used to provide improvements in the apparatus used in the invention e.g. providing better capability with and/or ease of use in the process of the invention.

In a further embodiment of the apparatus and/or process of the invention may comprise and/or use (for example as the vessel suitable for receiving a fat based edible material) at least one receiving vessel associated with loosening means such as a hopper(s) with an inflatable liner.

Optionally in this further embodiment the apparatus used in the invention further comprises a receiving vessel that comprises an input orifice and at least one inwardly taping interior surface and an output orifice, with loosening means deposed on or near one of more of the interior inwardly tapering surface of the vessel to reduce or eliminate the tendency of the material to adhere to the at least one interior surface and assist transport of the material within the vessel from the input orifice to the output orifice.

Preferably the loosening means comprises at least one flexible, reversibly deformable surface that forms at least part of (optionally all of) the interior surface of the vessel where

(i) the flexible surface comprises at least two opposing edges (preferably three edges, more preferably four edges, most preferably substantially all, for example all of the circumference edge) attached to interior of the vessel; and
(ii) a substantial part (optionally all) of the flexible surface other that the attached edges can be reversibly deformed so at least part (optionally all) of the flexible surface other that the attached edges is free to move in an inward direction away from the vessel exterior and/or the vessel interior surface to which it is adjacent;
(iii) the flexible surface forming at least part (optionally all) of the interior surface of the vessel exposed to its contents.

More preferably the interior of the flexible surface (e.g. surface coating) comprises material which is suitable for contact with food, most preferably the flexible surface consists of food contact approved material.

During use the flexible surface can be controlled to deform the interior surface and/or profile of the receiving vessel sufficiently to loosen and substantially remove any fat based material than adheres thereto, to assist transport of the material within the vessel from the input orifice to the output orifice.

In preferred receiving vessel at least one of the flexible deformable surfaces comprises a diaphragm controlled by one or more actuators (optionally hydraulically operated) optionally repeatedly at a suitable frequency, to change the shape of the diaphragm to prevent and/or remove adhesion of material thereon and optionally such surfaces can form part of the control means as described herein.

More preferably at least one of the flexible deformable surfaces comprises part of a substantially fluid tight flexible bladder, the interior pressure of which can optionally be adjusted to change the shape of the bladder surface that forms the interior of the container to prevent and/or remove adhesion of pasty mass thereon.

At least one of the flexible bladders may be filled or emptied of gas to deflate and/or inflate the bladder reversibly or alternatively at least one of the flexible bladders may be filled or emptied of liquid which can be operated reversibly to deform the bladder surface hydraulically (e.g. using a piston and reservoir chamber). The shape and/or internal profile of the bladder surface that forms the interior of the vessel will thus change and this can be used to prevent material from adhering and/or remove material already adhered to the surface. Optionally these changes can be repeated at a suitable frequency (e.g. resonate frequency) that is found to be most effective to remove material. Control of the loosening means may also be used with suitable sensors to tailor its operation to the properties of the material being transported optionally in real time (for example as part of the control means of the present invention). For example the receiving vessel may comprise at least one bladder, diaphragm and/or movable surface which may together forms substantially all of the interior inwardly tapering surface of the receiving vessel to form a deformable flexible interior skin therein.

Optionally in this further embodiment the process of the invention additionally comprises pre-steps (D) (E) and (F) performed before steps (a) and (b) of;

(D) adding the fat based edible material to a receiving vessel that comprises an input orifice; and output orifice and at least one inwardly taping interior surface having a loosening means located on or near thereto, the output orifice of the receiving vessel being in fluid connection with the input conduit of the processing chamber;

(E) operating the loosening means sufficiently to loosen and/or substantially remove fat based material adhering to the interior surface;

(F) transporting the fat based material from the receiving vessel to the energy delivery means used in step (a) via the output orifice of the receiving vessel and the input conduit of the processing chamber.

Usefully in another embodiment of the process of the invention the fat based material is added to and/or transported within a receiving vessel as described above. Conveniently the loosening step (E) comprises reversibly deforming the flexible surface to move the surface in an inward direction away from the vessel exterior.

The fat based edible material used in the present invention is a choco-material, most preferably a choco-material comprising solids and fat. As used herein the terms "refine", "refining" or "refined" refer to the general process of reducing particle size of solids in a fat based edible material of and/or used in the present invention by any suitable means such as the apparatus described herein, a roll refiner, a mill, mixer and/or any other similar apparatus. Optionally during refining solid particles in the fat based material are present as agglomerates and these solid agglomerates may be reduced in size or eliminated by treatment in at least one of the refining pre-steps described herein before the viscosity is reduced (preferably liquefied) in steps (a) and (b).

In a still further embodiment of the invention, the process may use (for example as the output conduit in fluid connection with the processing chamber from a refiner in one or more pre-steps) a vertical exit pipe.

In this further embodiment of the invention the apparatus used in the invention further comprises a pre-refiner located before the processing chamber having an output conduit fluidly connnected to the input conduit of the processing chamber so the output of the refiner is an intermediate that can be used directly in step (a) and (b) herein.

Optionally a receiving vessel having a loosening means associated therewith as described herein may be provided before the refiner and/or between the output of the refiner and the input of the processing chamber (maintaining the fluid connection between them) to reduce or eliminate the tendency of mass to adhere to the apparatus. The output orifice from the refiner and output orifice from the receiving means will generally be different from the output conduit from the processing chamber from step b) given the output from the refiner and/or output from at least one receiving vessel may be input for steps a) and b).

Further optionally a means may be provided to adjust the pressure of the material (increase or decrease) between exiting the output orifice of the refiner and before the refined material enters the input orifice of the processing chamber. Conveniently the pressure adjusting means is a gear pump, a lobe pump, a piston pump, vacuum pump and/ or an extruder. More conveniently the pressure of the material experienced in the refining pre-step is higher than that in viscosity reduction step. Even more conveniently solid ingredients may be added, mixed with fat and/or emulsified (e.g. using a mixer) prior to the material being pressurized with the pressure generating means.

Alternatively solid ingredients may be added, mixed with fat and/or emulsified prior to material being de-pressurized in a pressure reducing means.

Even more optionally the exit of the refiner may be orientated substantially vertically above the input conduit processing chamber so the material can be fed therein in whole or in part by gravity.

Even most optionally the refiner may be orientated to the main axis of the flow path of the material through of the refiner is substantially horizontal with the output exit of the refiner orientated perpendicular to the main axis and substantially vertically above the input conduit processing chamber so the material can be fed therein in whole or in part by gravity.

Usefully the refiner may comprises a horizontally orientated Lipp mixer. As used herein the term "Lipp mixer" denotes the horizontal axis high shear mixers available commercially from Lipp Mischtechnil of Germany that are designed for, and stated by the manufacturer to be suitable for, conching chocolate. A Lipp mixer is capable of substantially breaking-up of the agglomerates and intimate interactions of the solids with the fat within the fat based material to produce as intermediate a pasty or powdery mass with fat coating the solid particles therein. However it will be appreciated that any other suitable refiner known to those skilled in the art may also be used.

The refiner is preferably capable of substantially breaking up agglomerates and intimate interactions of the solids with the fat within a fat based edible material before the material is used in steps (a) and (b). So the refined material produced by the refiner may be an intermediate mass in which the solids are substantially coated with the fat, for later use in step (a) and (b) herein. Such intermediate refined material may be referred to as flake (or where the fat based material is chocolate, chocolate flake). The advantage of a pre-refining step is to lower the energy requirements for viscosity reduction in steps (a) and (b) and thus reducing the amount of total specific work that may need to be imparted according to equation (1) may be less.

The intermediate refined material obtained and/or obtainable by a refining step (such as at least one pre-step as described herein) may be used directly and/or immediately in steps (a) and (b) of the process of the invention optionally without additional pre-steps. Especially for chocolate flake it is generally preferred to use flake immediately and directly in the next (e.g. liquefaction) step (i.e. the fresher the flake the better). However alternatively the intermediate refined material obtained and/or obtainable by a refining may be collected and stored for later use in steps (a) and (b) of the process of the invention and/or in subsequent other steps to develop the physio-chemical, flavor and/or mechanical properties of the material.

It is one optional advantage of the present invention that for many fat based materials the pre-refining step can be eliminated or its time reduced as the process of the invention allows improved and efficient control of viscosity reduction and for example for some fat based materials one combined refining and liquefaction step may be possible. For highly agglomerated materials (e.g. having a significant proportion of large particles of solid agglomerates therein) a pre-refining step may still be helpful as equipment such as refiner rollers are optimally designed for and particularly effective at de-agglomerating (grinding solid particles to smaller sizes) to produce flake whilst perhaps being less suitable as the energy delivery means for viscosity reduction and/or liquefaction of flake in steps (a) and (b). However if a refining pre-step is used optionally where it makes sense to do so the refiner may also be operated analogously to steps (a) and (b) using the relationship in equation (1).

In a still further embodiment the refiner comprises a high shear mixer that produces as an intermediate a refined powdery or pasty mass (preferably powdery mass) for use in step (a) and (b) herein.

Preferably in this still further embodiment the process of the invention additionally comprises pre-steps (G) and (H) performed before steps (a) and (b) of:

(G) refining the fat based edible material in a refiner with a output exit fluidly connected to the input conduit and processing chamber used in step (a), by subjecting the material to a shear of at least 200,000 s$^{-1}$ (high shear) for sufficient time to form a powdery or pasty mass (preferably powdery mass) which is used directly in steps (a) and (b),
(H) transporting the high shear refined powdery or pasty mass (preferably powdery mass) from step (E) via the output exit and input conduit to the energy delivery means used in step (a).

Preferably in step (G) the refiner is oriented substantially horizontally with respect to the output exit and input conduit which are oriented substantially vertically such that the powdery or pasty mass (preferably powdery mass) is transported to the energy delivery means partially or wholly under gravity.

In another embodiment the refiner is a low shear low energy mixer that produces a as an intermediate a refined pasty or powdery mass (preferably pasty mass) for use in step (a) and (b) herein. In a yet further embodiment of the apparatus and/or process of the invention may be used in and/or comprise an additional low shear pre-mixing step.

A process as defined in any preceding embodiment the process additionally comprising a pre-steps (J) and (K) performed before steps (a) and (b) of:

(J) refining the fat based edible material having solid agglomerates therein in a refiner with a output exit fluidly connected to the input conduit and processing chamber used in step (a),
by subjecting the material to a shear no more than 200,000 s$^{-1}$ (low shear) and total mixing energy no more than 1000 kW (low energy) calculated at a material flow rate of 20 kg/min; where the low shear, low energy mixing is performed for sufficient time to substantially break-up agglomerates and intimate interactions of any solids with the fat to produce a pasty or powdery mass (preferably pasty mass) in which solids therein are substantially coated with fat; the pasty or powdery mass (preferably pasty mass) being used directly in steps (a) and (b); and
(K) transporting the low shear low energy refined pasty mass from step (J) via the output exit and input conduit to the energy delivery means used in step (a).

Step (J) may be performed by a known method such as a conventional conch.

As used herein the term low shear (for example in some of the embodiments described herein) conveniently denotes application of shear forces to a material such that the peak shear imparted to the material is not more than 200,000 reciprocal seconds. More conveniently low shear denotes than the shear is less than or equal to 150,000s$^{-1}$. An even more convenient degree of low shear (for example as used a low-shear pre-mixing step as described herein) may be from 1000s$^{-1}$ to 150,000s$^{-1}$, most conveniently from 5000s$^{-1}$ to 120,000s$^{-1}$, for example from 10,000s$^{-1}$ to 100,000s$^{-1}$.

As used herein the term low mixing energy (for example in some of the embodiments described herein in a pre-step) denotes a total amount of mechanical energy imparted to a material by a low shear mixer of no more than 100 kJ, preferably less than or equal to 50 kJ, more preferably less than or equal to 1000 J, most preferably less than or equal to 100 J based on a flow rate of material through the mixer of 50 kg per minute.

The flow rate of the material through a low shear mixer in a pre-step used in an embodiment of a process of the invention may be from 1.5 to 100 kg per minute and thus for example the amounts of total energy imparted to the material can be adjusted accordingly for a given flow rate to impart total low energy values to the mass that lie within the values given above. It will be appreciated when a material is used in a pre-mixing step outside step (a) and (b) of the present invention the amount of work imparted by such pre-mixing may be outside the relationships described herein in equation (1) and/or (2) although it is also possible that such relationships are satisfied.

Optionally a low degree of work that may be achieved in a pre-mixing step used in an embodiment of the invention may performed by operating the low shear mixer at a power of no more than 100 kW (low mechanical power), preferably less than 50kW, more preferably less than 1000 W per kilogram of material mixed (e.g. a pasty mass).

A low shear mixer may comprise a rotatable shaft with paddles or the like deposed thereon to achieve mixing, and to avoid substantially amounts of high shear being experienced by the material mixed, it is preferred that the low shear mixer is operated at rotational speed of less than 300 rpm, more preferably less than 200 rpm, even more preferably less than 100 rpm, most preferably less than 50 rpm. Usefully the rotor in such a low shear mixer is operated at a rotational speed of from 1 to 300 rpm, more preferably from 5 to 200 rpm, even more preferably from 10 to 100 rpm, and most preferably 20 to 50 rpm.

Conveniently low shear mixing may be achieved by passing the material at reduced pressure through a double screw filler, more conveniently by elongate flow through such a filler.

All aspects of the embodiments described herein may also be controlled by control means in addition to the control means used as described herein to control the energy delivery means. This provides a method to provide an overall control of the entire process of the invention which may be wholly or partially automated.

The present invention provides for an edible fat based material obtained and/or obtainable by a process of the present invention comprising a choco-composition, most usefully a foodstuff comprising (for example consisting of) chocolate and/or compound.

An embodiment of the process of the invention delivers a choco-material, for example chocolate or compound, of consistent pre-determined viscosity. Preferred products produced by the present invention have a viscosity (PV) of from 2 to 6 Pa.s, more preferably from 3 to 5 Pa.s.

The product obtained directly or indirectly from a process of the present invention (e.g. from steps a) and/or b)) may be collected and stored for later use or be used immediately in later steps.

Optionally the product comprises the fat based material as a continuous phase within which the moisture content is present dispersed as droplets and/or as a coating on the surface of hydrophilic particles, e.g. sugar particles. Preferably the dispersed droplets are substantially homogenous in size (e.g. as defined by a DSD as described herein) Usefully the dispersed droplets are substantially homogenously dispersed within the fat based material (i.e. so that the droplets seen in any sample are typical of and representative of the whole material) independent of the viscosity of the material i.e. whether the continuous phase is a free flowing liquid of low viscosity or a viscous liquid or a solid. The dispersed water may be present as droplets of a single phase (where the product comprises a water in oil (w/o) emulsion) and/or as droplets of a multi-phase fluid (where the product comprise an oil-in-water-in oil (o/w/o) emulsion).

Preferably the dispersed water droplets (or water containing droplets) are sufficiently small to be invisible to the naked eye (i.e. below 100 microns) to have minimal impact on the visual appearance of the final product.

As discussed above one of the advantages of the process of the invention is that surprisingly liquefaction of a fat based material can be achieved with higher amounts of water present than thought possible before. Therefore products of the invention may be prepared having a high moisture content that has either not be achievable before for prior art fat based compositions (especially for choco-materials such as chocolate or compound) either at all or in a cost effective manner on an industrial scale.

Therefore broadly in accordance with another aspect of the invention there is provided a choco-material which does not have a low level of moisture (as defined herein) and preferably has a high level of moisture (as defined herein).

In a still other embodiment, the fat based product has a moisture content of conveniently at least 1.3%, more conveniently at least 1.4%, more conveniently at least 1.5%, even more conveniently at least 1.8%, most conveniently at least 2.0%, for example at least 2.5%, by weight of the total weight of the product. In this embodiment such fat based products of the invention may be prepared by any suitable process compatible with the process of the invention (and thus also include products such as chocolate and/or compound prepared by a crumb process). These 'wet' products are even wetter that those typically be prepared by a crumb process (having 1.2% moisture by weight).

In this embodiment, the fat based product provided by the present invention (especially when comprising or consisting of chocolate and/or compound) has a moisture content advantageously from 1.3% to 5%, more advantageously from 1.5% to 4.5%, even more advantageously from 1.8% to 4.0%, most advantageously from 2.0% to 3.5%, for example from 2.0% to 3.0% by weight based on the total weight of the product usefully by total weight of chocolate and/or compound.

In embodiments of the invention described herein provide a choco-material (such as chocolate and/or compound), it is preferred where the moisture content of the product is less than or equal to 1.2% by weight the product is obtained by a non-crumb process. Such non-crumb products still have a higher moisture content than previously obtainable by other processes (such as by conching) where low moisture content (less than 0.8%) was believed to be required.

Therefore in a yet other embodiment, a choco-material such as chocolate and/or compound prepared by other than a crumb process, has a moisture content of at least 0.8% usefully at least 0.9%, more usefully at least 1.0%, most usefully at least 1.1%, for example at least 1.2% by weight based on of the total weight of the product, preferably based on the total weight of the chocolate and/or compound,

In a further embodiment, a a choco-material such as chocolate and/or compound prepared by other than a crumb process, has a moisture content of advantageously from 0.8% to 5%, more advantageously from 0.9% to 5.0%, even more advantageously from 1.0% to 4.5%, most advantageously from 1.1% to 4%, for example from 1.2% to 3% by weight based on the total weight of the product, preferably based on by weight of the chocolate and/or compound.

An embodiment of the process of the invention delivers a choco-material, for example chocolate or compound, of consistent pre-determined viscosity. Preferred products have a viscosity (PV) of from 1 to 12 Pa.s, preferably of 1.5 to 10 Pa.s, more preferably of from 2 to 6 Pa.s, more preferably from 3 to 5 Pa.s.

A yet still other embodiment the product of present invention, provides an edible fat based material characterized by at least one of the following parameters.

I) a viscosity (PV) of from 2 to 6 Pa.s, usefully from 3 to 5 Pa.s;
II) a yield (YS) of from 4 to 10 Pa, conveniently from 5 to 8 Pa; and/or
III) a moisture content of preferably at least 0.8% to 5%, more preferably from 1.3% to 5.0%, even more preferably from 1.5% to 4.5% by weight, most preferably from 1.8% to 4.0%, for example from 2.0% to 3.5% by weight based on the total weight of the fat based material.

A particularly preferred product of the present invention has a viscosity (PV) of from 2 to 6 Pa.s and a moisture content of from 1.3% to 5.0% by weight of the product.

In a further embodiment the process and material of the invention can also be used to produce material suitable for spraying.

Fat based edible materials with a low fat content are highly viscous and are thus unsuitable for certain applications for example application via spraying. Therefore additional fat (where the material is chocolate typically cocoa butter) must be added, at a minimum amount of 25% more by weight and often in amounts as high as 50% extra fat by weight, to lower the viscosity of the material sufficiently so it is capable of being sprayed. The precise viscosity required for spraying may vary by material batch, spray conditions and the temperature but may be typically from 2 to 6 Pa.s. Spraying is a useful means to deposit fat based materials such as chocolate more precisely and economically on a substrate (e.g. product) producing less waste and thinner coat weight. However spraying is not widely used given the need to have a high fat content. Materials with a high fat content may be undesirable from a health perspective when the trend is to low the fat content especially in confectionery products such as chocolate. Cocoa butter is also a very expensive ingredient so high fat chocolate will be cost more to produce (and other fats can typically not be added instead of cocoa butter if the product is to satisfy the legal definition of chocolate).

Thus it has been believed that it was impossible (or effectively impractical) to obtain a low fat edible fat based material (such as low fat chocolate) that also had a sufficiently low viscosity so the material could be sprayed.

Surprisingly it has been found that preparing a fat based edible material such as chocolate according to the process of the invention allows viscosity to be reduced to low levels even with a low fat content and thus the material can be sprayed without addition of further fats (such as cocoa butter).

Therefore in a further aspect of the present invention there is provided the use in a spraying process of a fat based edible material having a low fat content of for example less than 50% by weight of the total weight of the material, the material being prepared in process of the invention to have a low viscosity of for example 6 Pa.s or less.

In a still other aspect of the present invention there is provided a process for spraying a fat based edible material onto a substrate the material having a low fat content of for example less than 50% by weight of the total weight of the material the material being prepared in process of the invention to have a low viscosity of for example 6 Pa.s or less.

The spraying may be performed at a reduced (chilled) temperature lower than ambient temperature, more preferably at a temperature from 5°C to 18°C.

The low viscosity, low fat material used in the spray process may be transformed in the process of the invention by an energy delivery means comprising a combination of elongation/extensional shear together with high rotation shear

The fat based edible material may preferably comprise a fat based confectionery composition more preferably comprise a choco-material, most preferably is chocolate or compound, for example is chocolate.

As used herein low fat content denotes a fat based edible material having a fat content of less than 50% by weight.

As used herein high fat content denotes a fat based edible material having a fat content of at least 50% by weight.

The process of the invention can be used to produce material which contains highly stable seed crystals, the presence of which can usefully improve product quality. Thus this aspect of the present invention provides fat based materials (the material preferably comprising a choco-material, more preferably comprising chocolate or compound, most preferably being chocolate) which have an greatly enhanced heat stability as the inherent stability of the fat crystals within a fat systems can be maximized. In one embodiment of the invention the process of the invention may be used to increase the proportion of stable polymorphs that are formed from symmetrical triglycerides within a fat based material. Preferred symmetrical triglycerides may comprise cocoa butter (CB), but this is just one example. This aspect of the present invention can also be used to generate fat based material (such as fat based powders) that have improved stability even with a low content of fat (e.g. low saturated fat content). Such fat based materials have been found to readily retain their shape when transformed for example when compressed into tablets

Beckett (4th ed.) Chapter 12, section 12.2 explains that:

*"Polymorphism is the ability of a molecule to crystallize in a number of different crystal packing configurations. While polymorphism is present in most fats, those rich in symmetrical monounsaturated triglycerides such as SOS (i.e. whose structure is saturated fatty acid-oleic acid-saturated fatty acid) are highly polymorphic. This high degree of polymorphism is not only found in cocoa butter, but also in those SOS-rich fat used in cocoa butter equivalents"*

It can be difficult to temper chocolate mass when the mass contains poor quality cocoa butter caused by seasonal variation or indulgent recipes (i.e. having a higher fat content than typical). Tempering is the process by which the proportion of crystals having different polymorphic forms (polymorphs) is altered to improve the chocolate for example by melting the less stable polymorphs and recrystallizing the chocolate to have a greater amount of the more stable polymorphs. Tempering thus may improve the stability of the chocolate (for example its ability to resist fat migration such as bloom) and a high proportion of stable polymorphs may also improve the look and feel of the chocolate (create a more shiny appearance and/or high degree of chocolate 'snap').

It would be desirable to improve the properties of a fat based edible material of the invention by more easily forming a high proportion of more stable polymorphs, for example by increasing the amount of the stable polymorphs that are generated in situ and/or also by reducing the generation of, or removing less stable polymorphs. Ideally this may then eliminate and/or reduce the need for a separate later tempering step.

In prior art processes polymorphs that can act as stable seed crystals may be obtained or made separately and then added to a fat based material during manufacture to promote generation of more stable polymorph of the same type in the material to which they were added. Thus method (seeding) may be used to improve the stability and other properties of a fat based material to avoid or reduce the need for further tempering step. For example seeds of cocoa butter rich in Form VI polymorph can be produced by commercially available machines such as that available from Buhler under the trade designation Seed Master. However adding seed material in this manner to a process creates complications as there is then a serial increment in the crystal content if the fat based material is recycled and reintroduced into the process prior to the seeding step, as typically the case when for example chocolate is used to enrobe a product.

Regardless of the quality of the cocoa butter used or the complex mixture of fats in a given chocolate recipe, in an industrial process the only practical method available to process chocolate is conventional tempering which relies on cooling and tends to encourage the formation of less stable polymorphs. Conventional tempering severely undermines the quality of the chocolate produced in a factory.

Surprisingly the applicant has found using the process of the invention to prepare an edible fat based material promotes unusual crystallization behavior in the material. For example the process of the invention may be used to produce chocolate comprising high proportions of more stable polymorphs of CB, such as the beta polymorphs Form VI and Form V, with chocolate having a high proportion of Form VI readily obtainable. The process of the invention can advantageously be further controlled using additional parameters such as pressure, temperature of chocolate and cooling temperature to achieve high proportions or the desired polymorph. Additional seeding steps can be avoided, and further tempering steps can be reduced or eliminated entirely.

As used herein the preferred polymorphs for cocoa butter obtained and/or obtainable by a process of the invention are characterized by a X-ray diffraction (XRD) with one strong line at 4.6 Å (Angstrom $\equiv 1 \times 10^{-10}$ m). These polymorphs are well known to those skilled in the art and for example are described in Beckett (4th edition) Chapter 12 (XRD shown in Figure 12.3) as the beta ($\beta$) form, which term encompasses both CB polymorph V (also referred to as From V or $\beta_2$ or $\beta_v$) and CB polymorph VI (also referred to as Form VI or $\beta_1$ or $\beta_{vi}$). Form VI is more stable than Form V and thus preferred, and thus fat based materials with a high proportion of Form VI are even more preferred.

Therefore in another aspect of the present invention provides using a process of the present invention for the purpose of producing a choco-material, more preferably comprising chocolate or compound, most preferably being chocolate, such that the material comprises a high proportion (at least 50 parts by weight) of a desired polymorph based on 100 parts by weight being the total amount of the material.

Advantageously the desired polymorph(s) is / are at least one crystalline form of at least one symmetrical triglyceride, more advantageously is the beta (β) form of cocoa butter, most advantageously is Form VI of CB.

The high proportion of desired polymorph is present in a total amount of usefully at least 60 parts, more usefully at least 70 parts, even more usefully at least 80 parts, most usefully at least 90 parts, for example is substantially 100 parts by weight based on 100 parts being the weight of the material. Conveniently the preceding amounts of the desired polymorph may also be calculated (especially where the desired polymorph is beta CB or Form VI) with respect to 100 parts by weight being the total amount of cocoa butter present in the material, more conveniently 100 parts by weight being the total amount of crystalline cocoa butter present in the material.

The desired polymorph (such as beta CB or Form VI) may be used as and/or to form stable seed crystals that encourage the growth of more of the desired polymorph, for example in the presence of further material which is a source of the molecule (such as CB) that forms the desired polymorph (optionally the further material being amorphous, liquid; non-crystalline and/or a polymorph less stable than the desired polymorph). The desired polymorph may be added to the further material or the further material may be added to the desired polymorph so that the desired polymorph is in local excess and is better able promote formation of crystals that inhabit the desired polymorph.

A further aspect of the process of the present invention provides a fat based edible material (the material preferably comprising a choco-material, more preferably comprising chocolate or compound, most preferably being chocolate) having a high proportion of a desired polymorph the material being prepared by process of the invention.

A further other aspect of the present invention provides a process for a fat based edible material (the material preferably comprising a choco-material, more preferably comprising chocolate or compound, most preferably being chocolate) comprising a high proportion of a desired polymorph, where the process comprises the steps (a) and (b) of the process of the invention and where optionally the process is free of steps which comprise additional tempering and/or addition of seed crystals.

The material of the invention having a high proportion of a desired polymorph (that may for example act as stable seed crystals therein) may be transformed in the process of the invention by an energy delivery means as described herein.

Optionally chocolate liquefied by the process of the invention may be further processed by spraying optionally at a reduced (chilled) temperature lower than ambient temperature, more preferably at a temperature from 10°C to 27°C to generate an increased amounts of a desired polymorph (such as beta CB, e.g. Form VI).

Products produced by the present invention optionally comprise bloom (heat) resistant chocolate, chocolate having longer shelf life and/or higher quality because the greater proportion of stable polymorphs present (i.e. higher degree of temper).

When chocolate is exposed to heat, beside the observation of bloom another quality defect that will occur is shape deformation. Previously attempts to address this problem have proved unsatisfactory. For example water or glycerol can be added to the chocolate to alter the network of sugar to resist deformation, but this involves a significant change in the chocolate manufacturing process, adds complexity and may adversely impact taste or other desired properties in the product (e.g. clean label).

The applicant has surprisingly found that chocolate prepared continuously by the viscosity reduction process of the invention is more heat resistant that prior art chocolate of similar recipe prepared using conventional conching. The heat resistance can be shown by better shape retention and/or less oil separation after heating (typically test temperature 37°C) than prior art chocolate.

Therefore in another aspect of the present invention there is provided using a process of the present invention for the purpose of producing a fat based edible material (preferably a choco-material, more preferably chocolate) having improved heat resistance (e.g. better shape retention and/or less oil separation after heating at 37°C) compared to the same fat based material prepared identically other than having the viscosity reduced by a process other than that of the present invention.

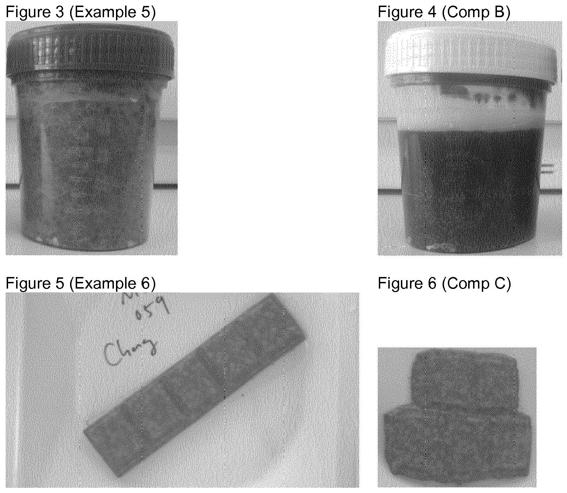

A further aspect of the present invention provides a heat resistant fat based edible material (preferably a choco-material, more preferably chocolate) (e.g. better shape retention and/or less oil separation after heating at 37°C), the material being prepared in process of the invention. Examples 5 and 6 and references Comp B and Comp C below together with Figures 4 to 7 illustrate this aspect of the present invention.

Without wishing to be bound by any theory the applicant believes that following the process of the invention may more effectively and efficiently reduce the mean distance between constituent particles within the fat based material preferably to sub-micron distances and this may narrow the distance between particle surfaces sufficiently to promote closer interaction and thus lower the energy required for crystallization.

Further aspects of the invention and preferred features thereof are given in the claims herein, which form an integral part of the disclosure of the present invention whether or not such claims correspond directly to parts of the description herein.

Certain terms as used herein are defined and explained below unless from the context their meaning clearly indicates otherwise.

Within the context of the present invention, terms such as "fat based" and/or "fat based edible product' denotes a composition, preferably a choco-confectionery that comprises a matrix of edible hydrophobic material (e.g. fat) as the continuous phase and a dispersed phase comprising solid particles dispersed within the edible hydrophobic continuous phase.

Within the context of the present invention the term "fat" as used herein denotes hydrophobic material which is also edible. Thus fats are edible material (preferably of food grade) that are substantially immiscible with water and which may comprise one or more solid fat(s), liquid oil(s) and/or any suitable mixture(s) thereof. The term "solid fat" denotes edible fats that are solid under standard conditions and the term "oil" or "liquid oil" (unless the context indicates otherwise) both denote edible oils that are liquid under standard conditions.

Preferred fats are selected from one or more of the following: coconut oil, palm kernel oil, palm oil, cocoa butter (CB), cocoa butter equivalents (CBE), cocoa butter substitutes (CBS), cocoa butter replacers (CBR), butter oil, lard, tallow, oil / fat fractions such as lauric or stearic fractions, hydrogenated oils, and blends thereof as well as fats which are typically liquid at room temperature such as any vegetable or animal oil. However fats that are most preferred for use herein for use in preparing the micro-aerated choco-materials of the present invention are CB, CBE, CBS, CBR and/or any mixtures and/or combinations thereof.

The liquid oil may comprise mineral oils and/or organic oils (oils produced by plants or animals), in particular food grade oils. Examples of oils include: sunflower oil, rapeseed oil, olive oil, soybean oil, fish oil, linseed oil, safflower oil, corn oil, algae oil, cottonseed oil, grape seed oil, nut oils such as hazelnut oil, walnut oil, rice bran oil, sesame oil, peanut oil, palm oil, palm kernel oil, coconut oil, and emerging seed oil crops such as high oleic sunflower oil, high oleic rapeseed, high oleic palm, high oleic soybean oils & high stearin sunflower or combinations thereof.

The fat content in the product of the present invention may be provided by fats of any origin. The fat content is intended to indicate the total fat content in the composition, comprising either the content coming from solid fats and/or the content of liquid oils and thus the oil content will also contribute to the total amount of fat content as described herein for a fat based confectionery composition.

The term 'fat based composition and/or mass' is choco-material used in the invention.

The present invention relates specifically to preparation of a confectionery product, composition and/or mass that comprises choco-material (preferably chocolate and/or compound, more preferably chocolate) as defined herein as well as optionally other confectionery products and/or components thereof.

The term 'chocolate' as used herein denotes any product (and/or component thereof if it would be a product) that meets a legal definition of chocolate in any jurisdiction and also include product (and/or component thereof) in which all or part of the cocoa butter (CB) is replaced by cocoa butter equivalents (CBE) and/or cocoa butter replacers (CBR).

The term 'chocolate compound' or 'compound' as used herein (unless the context clearly indicates otherwise) denote chocolate-like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'choco-material' as used herein denote chocolate, compound and other related materials that comprise cocoa butter (CB), cocoa butter equivalents (CBE), cocoa butter replacers (CBR) and/or cocoa butter substitutes (CBS). Thus choco-material includes products that are based on chocolate and/or chocolate analogues, and thus for example may be based on dark, milk or white chocolate and/or compound.

Unless the context clearly indicates otherwise it will also be appreciated that in the present invention any one choco-material may be used to replace any other choco-material and neither the term chocolate nor compound should be considered as limiting the scope of the invention to a specific type of choco-material. Preferred choco-material comprises chocolate and/or compound, more preferred choco-material comprises chocolate, most preferred choco-material comprises chocolate as legally defined in a major jurisdiction (such as Brazil, EU and/or US).

The term 'choco-coating' as used herein (also refers to a 'choco-shell') denotes coatings made from any choco-material. The terms 'chocolate coating' and 'compound coating' may be defined similarly by analogy. Similarly the terms 'choco-composition, (or mass)', 'chocolate composition (or mass)' and 'compound composition (or mass)' denote compositions (or masses) that respectively comprise choco-material, chocolate and compound as component(s) thereof in whole or part. Depending on their component parts the definitions of such compositions and/or masses may of course overlap.

The term 'choco-confectionery' as used herein denotes any foodstuff which comprises choco-material and optionally also other ingredients and thus may refer to foodstuffs such confections, wafers, cakes and/or biscuits whether the choco-material comprises a choco- coating and/or the bulk of the product. Choco-confectionery may comprise choco-material in any suitable form for example as inclusions, layers, nuggets, pieces and/or drops. The confectionery product may further contain any other suitable inclusions such as crispy inclusions for example cereals (e.g. expanded and/or toasted rice) and/or dried fruit pieces.

The choco-material of the invention may be used to mould a tablet and/or bar, to coat confectionery items and/or to prepare more complex confectionery products. Optionally, prior to its use in the preparation of a choco-confectionery product, inclusions according to the desired recipe may be added to the choco-material. As it will be apparent to a person skilled in the art, in some instances the product produced by the invention will have the same recipe and ingredients as the corresponding composition and/or mass while in other instances, particularly where inclusions are added or for more complex products, the final recipe of the product may differ from that of the composition and/or mass used to prepare it.

In one preferred embodiment of the invention the choco-confectionery product comprises a substantially solid moulded choco-tablet, choco-bar and/or baked product surrounded by substantial amounts of choco-material. These products are prepared for example by substantially filling a mould with choc-material and optionally adding inclusions and/or baked product therein to displace choc-material from the mould (so-called wet shelling processes), if necessary further topping up the mould with choco-material. For such preferred products of the invention the choco-material forms a substantial or whole part of the product and/or a thick outside layer surrounding the interior baked product (such as a wafer and/or biscuit laminate). Such solid products where a mould is substantially filled with chocolate are to be contrasted with products that comprise moulded thin chocolate shells which present different challenges. To prepare a thin coated chocolate shell a mould is coated with a thin layer of chocolate, the mould being inverted to remove excess chocolate and/or stamped with a cold plunger to define the shell shape and largely empty the mould. The mould is thus coated with a thin layer of chocolate to which further ingredients and fillings may be added to form the interior body of the product.

Unless the context herein clearly indicates otherwise it will also be well understood by a skilled person that the term choco-confectionery as used herein can readily be replaced by and is equivalent to the term chocolate confectionery as used throughout this application and in practice these two terms when used informally herein are interchangeable. However where there is a difference in the meaning of these terms in the context given herein, then chocolate confectionery and/or compound confectionery are preferred embodiments of the choco-confectionery of the present invention, a preferred embodiment being chocolate confectionery.

Preferred choco-confectionery may comprise one or more choco-product(s) and/or choco-ingredients therefor, for example selected from the group consisting of: chocolate product(s). compound product(s), chocolate coating(s) and/or compound coating(s). The products may comprise uncoated products such as choco-bar(s) and/or choco-tablet(s) with or without inclusions and/or products coated with choco-material such as coated biscuits, cakes, wafers and/or other confectionery items. More preferably and/or alternatively any of the aforementioned may comprise one or more cocoa butter replacer(s) (CBR), cocoa-butter equivalent(s) (CBE), cocoa-butter substitute(s) (CBS) and/or any suitable mixture(s) thereof.

In choco-confectionery the cocoa butter (CB) may be replaced by fats from other sources. Such products may generally comprise one or more fat(s) selected from the group consisting of: lauric fat(s) (e.g. cocoa butter substitute (CBS) obtained from the kernel of the fruit of palm trees); non-lauric vegetable fat(s) (e.g. those based on palm or other specialty fats); cocoa butter replacer(s) (CBR); cocoa butter equivalent(s) (CBE) and/or any suitable mixture(s) thereof. Some CBE, CBR and especially CBS may contain primarily saturated fats and very low levels of unsaturated omega three and omega six fatty acids (with health benefits). Thus in one embodiment in choco-confectionery of the invention such types of fat are less preferred than CB.

One embodiment of the invention provides a multi-layer product optionally comprising a plurality of layers of baked foodstuff (preferably selected from one or more wafer and/or biscuit layers, and/or one or more fillings layers there between with at least one coating layer located around these layers foodstuff, the coating comprising a choco-material of or prepared according to the invention.

A further embodiment of the invention provides a choco-confectionery product, further coated with chocolate (or equivalents thereof, such as compound) for example a praline, chocolate shell product and/or chocolate coated wafer or biscuit any of which may or may not be layered. The chocolate coating can be applied or created by any suitable means, such as enrobing or moulding. The coating may comprise a choco-material of or prepared according to the invention.

Another embodiment of the invention provides a choco-confectionery product of and/or used in the present invention, that comprises a filling surrounded by an outer layer for example a praline, chocolate shell product.

In another preferred embodiment of the invention the foodstuff comprises a multi-layer coated choco- product comprising a plurality of layers of wafer, choco-material, biscuit and/or baked foodstuff, with filling sandwiched between them, with at least one layer or coating being a choco-material (e.g. chocolate) of the invention. Most preferably the multi-layer product comprises a choco-confectionery product (e.g. as described herein) selected from sandwich biscuit(s), cookie(s), wafer(s), muffin(s), extruded snack(s) and/or praline(s). An example of such a product is a multilayer laminate of baked wafer and/or biscuit layers sandwiched with filling(s) and coated with chocolate.

Baked foodstuffs used in the invention may be sweet or savoury. Preferred baked foodstuffs may comprise baked grain foodstuffs which term includes foodstuffs that comprise cereals and/or pulses. Baked cereal foodstuffs are more preferred, most preferably baked wheat foodstuffs such as wafer(s) and/or biscuit(s). Wafers may be flat or shaped (for example into a cone or basket for ice-cream) and biscuits may have many different shapes, though preferred wafer(s) and/or biscuit(s) are flat so they can be usefully be laminated together with a confectionery filling of the invention (and optionally a fruit based filling). More preferred wafers are non-savoury wafers, for example having a sweet or plain flavour.

A non-limiting list of those possible baked foodstuffs that may comprise choco-compositions that comprise choco-material of and/or used in the present invention are selected from: high fat biscuits, cakes, breads, pastries and/or pies; such as from the group consisting of: ANZAC biscuit, biscotti, flapjack, kurabiye, lebkuchen, leckerli, macroon, bourbon biscuit, butter cookie, digestive biscuit, custard cream, extruded snacks, florentine, garibaldi gingerbread, koulourakia, kourabiedes, Linzer torte, muffin, oreo, Nice biscuit, peanut butter cookie, polvoron, pizzelle, pretzel, croissant, shortbread, cookie, fruit pie (e.g. apple pie, cherry pie), lemon drizzle cake, banana bread, carrot cake, pecan pie, apple strudel, baklava, berliner, bichon au citron and/or similar products.

Preferably the choco-material of or prepared according to the invention may be suitable for use as (in whole or in part as a component) of one or more coatings and/or fillings.

The coating and/or filling may comprise a plurality of phases for example one or more solid and/or fluid phases such as fat and/or water liquid phases and/or gaseous phases such as emulsions, dispersions, creams and/or foams.

Therefore broadly a further aspect of the invention comprises a foodstuff comprising choco-material and/or choco-composition as described herein.

A yet further aspect of the invention broadly comprises use of a choco-material of or prepared according to the invention as a choco-confectionery product and/or as a filling and/or coating for a foodstuff of the invention as described herein.

Unless defined otherwise, all technical and scientific terms used herein have and should be given the same meaning as commonly understood by one of ordinary skill in the art to which this invention belongs.

Unless the context clearly indicates otherwise, as used herein plural forms of the terms herein are to be construed as including the singular form and vice versa.

The terms 'effective', 'acceptable' 'active' and/or 'suitable' (for example with reference to one or more of any process, use, method, application, preparation, product, material, formulation, composition, recipe, component, ingredient, compound, monomer, oligomer, polymer precursor, and/or polymer described herein of and/or used in the present invention as appropriate) will be understood to refer to those features of the invention which if used in the correct manner provide the required properties to that which they are added and/or incorporated to be of utility as described herein. Such utility may be direct for example where a moiety has the required properties for the aforementioned uses and/or indirect for example where a moiety has use as a synthetic intermediate and/or diagnostic and/or other tool in preparing other moeity of direct utility. As used herein these terms also denote that sub-entity of a whole (such as a component and/or ingredient) is compatible with producing effective, acceptable, active and/or suitable end products and/or compositions.

Preferred utility of the present invention comprises use as a food stuff, preferably as a confectionery product and/or intermediate in the manufacture thereof.

Unless the context clearly indicates otherwise, as used herein plural forms of the terms herein are to be construed as including the singular form and vice versa.

The term "comprising" as used herein will be understood to mean that the list following is non exhaustive and may or may not include any other additional suitable items, for example one or more further feature(s), component(s), ingredient(s) and/or substituent(s) as appropriate.

In the discussion of the invention herein, unless stated to the contrary, the disclosure of alternative values for the upper and lower limit of the permitted range of a parameter coupled with an indicated that one of said values is more preferred than the other, is to be construed as an implied statement that each intermediate value of said parameter, lying between the more preferred and less preferred of said alternatives is itself preferred to said less preferred value and also to each less preferred value and said intermediate value.

For all upper and/or lower boundaries of any parameters given herein, the boundary value is included in the value for each parameter. It will also be understood that all combinations of preferred and/or intermediate minimum and maximum boundary values of the parameters described herein in various embodiments of the invention may also be used to define alternative ranges for each parameter for various other embodiments and/or preferences of the invention whether or not the combination of such values has been specifically disclosed herein.

Unless noted otherwise, all percentages herein refer to weight percent, where applicable.

It will be understood that the total sum of any quantities expressed herein as percentages cannot (allowing for rounding errors) exceed 100%. For example the sum of all components of which the composition of the invention (or part(s) thereof) comprises may, when expressed as a weight (or other) percentage of the composition (or the same part(s) thereof), total 100% allowing for rounding errors. However where a list of components is non exhaustive the sum of the percentage for each of such components may be less than 100% to allow a certain percentage for additional amount(s) of any additional component(s) that may not be explicitly described herein.

The term "substantially" as used herein may refer to a quantity or entity to imply a large amount or proportion thereof. Where it is relevant in the context in which it is used "substantially" can be understood to mean quantitatively (in relation to whatever quantity or entity to which it refers in the context of the description) there comprises an proportion of at least 80%, preferably at least 85%, more preferably at least 90%, most preferably at least 95%, especially at least 98%, for example about 100% of the relevant whole. By analogy the term "substantially-free" may similarly denote that quantity or entity to which it refers comprises no more than 20%, preferably no more than 15%, more preferably no more than 10%, most preferably no more than 5%, especially no more than 2%, for example about 0% of the relevant whole. Preferably where appropriate (for example in amounts of ingredient) such percentages are by weight.

Any weight percentages in parameters above are calculated with respect to initial weight of the component.

Improved properties as used herein means the value of the component and/or the composition of and/or used in the present invention is > +8% of the value of the known reference component and/or composition described herein, more preferably > +10%, even more preferably > +12%, most preferably > +15%.

Comparable properties as used herein means the value of the component and/or composition of and/or used in the present invention is within +/-6% of the value of the known reference component and/or composition described herein, more preferably +/-5%, most preferably +/- 4%.

The percentage differences for improved and comparable properties herein refer to fractional differences between the component and/or composition of and/or used in the invention and the known reference component and/or composition described herein where the property is measured in the same units in the same way (i.e. if the value to be compared is also measured as a percentage it does not denote an absolute difference).

Unless otherwise indicated or the context clearly indicates otherwise all the tests herein are carried out under standard conditions as also defined herein.

As used herein, unless the context indicates otherwise, standard conditions (e.g. for defining a solid fat or liquid oil) means, atmospheric pressure, a relative humidity of 50% $\pm$5%, ambient temperature (22°C $\pm$2°) and an air flow of less than or equal to 0.1m/s. Unless otherwise indicated all the tests herein are carried out under standard conditions as defined herein.

Texture of foodstuffs is perceived as a composite of many different characteristics comprising various combinations of physical properties (such as mechanical and/or geometrical properties) and/or chemical properties (such as fat and/or moisture content). As used herein in relation to the compositions of the invention for a given fat and moisture content the composition texture can be related to the viscosity of the composition as a fluid when subjected to shear stress. Provided that the measuring technique is carefully controlled and the same shear rates are used apparent viscosity can be used herein as a guide to indicate texture. The term "viscosity" as used herein refers to the apparent viscosity of a fluid as measured by conventional methods known to those skilled in the art but in particular the method described herein is preferred. Some fluids display non-Newtonian rheology and cannot be totally characterized by a single rheological measurement point. Despite this apparent viscosity is a simple measure of viscosity useful for the evaluation of such fluids.

The viscosity of the compositions according to the invention and/or prepared by a method of the invention, as well as comparative examples, (for example choc-materials such as chocolate) can be characterized by plastic viscosity according to ICA method 46 (2000).

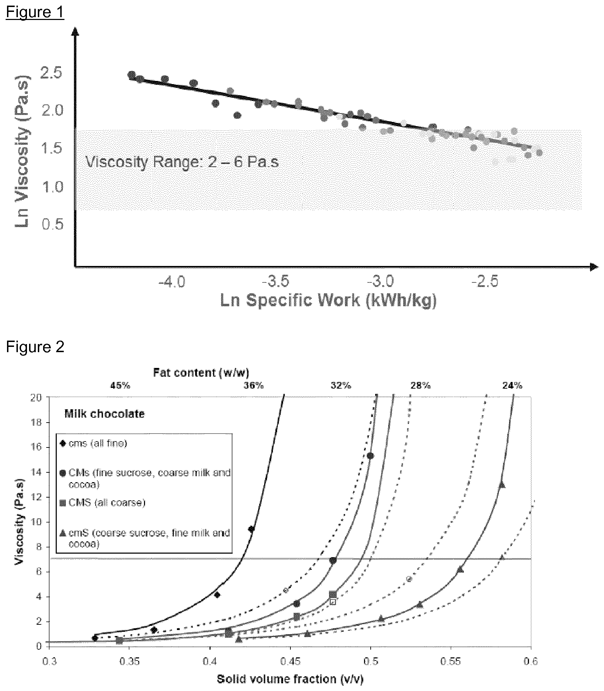

The invention is illustrated by the following non-limiting Figures 1 to 6 where:

Figure 1 is a plot showing the linear relationship of equation (1) for chocolate liquefaction under continuous shearing mixing.
Figure 2 is a plot of viscosity versus volume fraction for various milk chocolates of different fat content.
Figure 3 shows a chocolate of the invention (Example 5) held at 60°C for over one week showing no sedimentation.
Figure 4 shows a prior art chocolate as reference (Comp B) held at 60°C for over one week showing severe oil separation.
Figure 5 shows a chocolate tablet of the invention (Example 6) heated to 40°C and subject to a slam test three times that shows good shape retention even after heating.
Figure 6 shows a prior art chocolate tablet as reference (Comp C) heated to 40°C and subject to a slam test three times showing poor shape retention after heating.

The present invention will now be described in detail with reference to the following non limiting examples which are by way of illustration only.

Examples 1 to 4 (processing of Mass A)

Examples 1 to 4 shown in Table 1 below are different trials of a chocolate liquefaction process each operated according to the invention to produce respective liquid chocolate masses (Masses A1 to A4). In each of these examples (Ex 1 to 4) identically produced refiner flakes were pumped through a conveying twin-screw mixer of 5 inch diameter (the mixer available commercially from Readco) to obtain using the settings given in Table 1-a respective liquid chocolate mass comprising 28.5% of cocoa butter. Any of Masses A1 to A4 were suitable for use in later process steps to prepare the chocolate component of a product sold by Nestle under the trade mark Semi Sweet Morsel®. The Readco mixer was operated at different speed and flow rates for each of Examples 1 to 4 to achieve different specific work levels as shown in Table 1.

Table 1

| Ex | Feed Rate (kg/h) | Paddle Speed (rpm) | Motor Power (kW) | Specific Work (kWh/kg) | Measured Viscosity (Pa.s) | Model Predicted Viscosity (Pa.s) | Mass |
|---|---|---|---|---|---|---|---|
| 1 | 201 | 250 | 5.5 | 0.0274 | 7.9 | 8.4 | A1 |
| 2 | 623 | 96 | 9.6 | 0.0154 | 11.1 | 10.7 | A2 |
| 3 | 623 | 129 | 9.3 | 0.0149 | 11.9 | 10.9 | A3 |
| 4 | 623 | 163 | 10.8 | 0.0173 | 11.1 | 10.2 | A4 |

It can be seen that the most preferred model used in the invention (as described in equation (1A) ln $\eta$ = 0.5919 - 0.4268 ln $\omega$) predicts the viscosity of the Masses A1 to A4 to a first approximation for each of the respective Examples 1 to 4. The trials illustrated in Table 1 confirm that by following the process of the present invention the Readco mixer can be controlled to achieve a desired target viscosity using a minimum amount of work.

Thus the data and examples described herein show that the relationship described herein in equation (1) is valid when liquefying using a wide range of different amounts of work imparted to achieve a range of different viscosities. It is surprising that this deceptively simple relationship can be used to predict, and therefore control, a viscosity reduction process over a wide range of energy inputs.

Examples 5, 6 and reference examples Comp B and Comp C

Examples 5 and 6 and references Comp B and Comp C below together with Figures 3 to 6 illustrate the aspect of the present invention relating to heat resistance of chocolate of and whose viscosity is reduced by (conched) according to a process of the invention.

Example 5 (Figure 3) and Comp B (Figure 4)

The applicant has surprisingly found that chocolate prepared continuously by the viscosity reduction process of the invention, does not show severe oil separation after being held at 60°C for over one week as shown in the figures herein for Example 5 and Comp B. As shown in Figure 4 a significant layer of fat was separated out in the comparative prior art sample (Comp B) whereas Figure 3 shows no sedimentation was observed in the example of the invention (Example 5).

Without wishing to be bound by any theory this suggests the mobility of the melted fat may be highly restricted in the chocolate prepared by the process described herein.

Example 6 (Figure 5) and Comp C (Figure 6)

Tablets were prepared by adding chocolate to a conventional mould. The solid tablets where then incubated at temperature of 40°C and subject to three "slam" tests to assess the degree of resistance to deformation (i.e. ability of the chocolate to retain its shape) after heating.

Figure 5 shows that a chocolate tablet of the invention (Example 6) prepared according to the process of the invention suffers minimum deformation after the "slam" tests i.e. the chocolate has good shape retention post heating.

Figure 6 shows that a prior art tablet Comp C prepared by conventional conching shows very severe deformation after the "slam" tests, i.e. poor shape retention after heating.

**Claims**

**1.** A process for imparting specific work to a fat based edible material to reduce the viscosity of the material until the material reaches a pre-determined target viscosity ($\eta_{target}$), the process comprising the steps of:

(a) imparting a total amount of specific work $\overline{\omega}$ into the fat based edible material using an energy delivery means operated by one or more control parameter(s), where both the rate at which and total amount of specific work is imparted to the material is determined by the one or more control parameter(s); and
where the fat based material flows through the energy delivery means at an instant flow rate at a given moment in time 't' after the start of step (a) which flow is denoted by $Q_t$

(b) controlling the energy delivery means to reach a pre-determined target viscosity ($\eta_{target}$); where the rate of specific work imparted to the fat based material is determined by controlling one or more of the control parameter(s), such that the specific work imparted by the energy delivery means at a time t' after the start of step (a) satisfies the relationship given in equation 1:

$$\ln \eta_t = A - B \ln \varpi_t \quad (1)$$

where

(i) eta ($\eta_t$) denotes the viscosity at the time t' after the start of step (a) of the fat based material measured as plastic viscosity according to ICA method 46 (2000);
(ii) omega ($\overline{\omega}_t$) denotes total amount of specific work delivered to the fat based material after time t' since the start of step (a) calculated from the power and flow rate as given equation (2):

$$\varpi_t = \frac{P_t}{Q_t} \qquad (2),$$

where: $P_t$ denotes the power (measured in kilowatts (kW)) imparted to the fat based material by the energy imparting means at the time t' after the start of step (a) $Q_t$ denotes the instant flow rate (measured in kg per hour (kg/h)) of the fat based material through the energy delivery means at the time t' after the start of step (a); and
(iii) A is from 0.5 to 0.7; and
(iv) B is from 0.3 to 0.6.

(c) stopping the energy delivery means after t = T from imparting specific work to the fat based material, the time T being determined from equations (1) and (2) and the pre-determined target viscosity ($\eta_{target}$), wherein the fat based material is a choco-material (preferably chocolate or compound) and the process is used to liquefy the choco-material (i.e. pre-determined target viscosity ($\eta_{target}$) is liquid).

2. A process as claimed in claim 1, using an apparatus that has at least one sensor means associated therewith, and where in step (a) the sensor means measures at least one attribute of the fat based material to generate at least one input parameter used directly or indirectly to calculate the at least one control parameter using equation (1) and optionally also equation (2).

3. A process as claimed in any preceding claim in which

the mean (average) power delivered during the duration of steps (a) and (b) is denoted as $P_m$ which is calculated from measurement of instant power $P_t$ used at a various different times 't' and/or by averaging the total energy imparted $\overline{\omega}$ over the total duration time 'T' of step (a); and
the mean (average) flow rate (measured in kg per hour (kg/h)) of the fat based material through the energy delivery means delivered during the duration of steps (a) and (b) is denoted as $Q_m$ which is calculated from measurement of instant power $Q_t$ used at a various different times 't' and where
the total amount of specific work required to be imparted to the fat based material during steps (a) and (b) to achieve the pre-determined target viscosity ($\eta_{target}$) is denoted by $\overline{\omega}$ calculated from equation (1A):

$$\ln \eta_{target} = A - B \ln \varpi \quad (1A);$$

and where the total specific work $\overline{\omega}$ imparted to the fat based material during steps (a) and (b) may also be given by equation (2A):

$$\overline{\omega} = \frac{P_m}{Q_m} \qquad (2A)$$

and where the time T (which is the duration over which the energy imparting means imparts specific work $\overline{\omega}$ into the fat based edible material in step (a)) is determined from the values $P_m$ and/or $Q_m$.

4. A process as claimed in any preceding claim in which A is from 0.5 to 0.7, preferably from 0.55 to 0.65, preferably from 0.57 to 0.61, preferably from 0.580 to 0.605, preferably from 0.5900 to 0.6000 or is 0.592 to 3 significant figures or 0.5919 to 4 significant figures.

5. A process as claimed in any preceding claim in which B is from 0.3 to 0.6, preferably from 0.35 to 0.55, preferably from 0.37 to 0.50 preferably from 0.410 to 0.440, preferably from 0.4200 to 0.4300 or is 0.427 to 3 significant figures or is 0.4268 to 4 significant figures.

6. A process as claimed in any preceding claim for reducing the viscosity of a fat based edible material where step (a) the work imparting means comprises a mixing step using a mixing means where the rate of mixing is controlled by one or more of the control parameters.

7. A process as claimed in any preceding claim for reducing the viscosity of fat based edible material until it reaches a target viscosity of from 2 to 6 Pa.s.

8. A process as claimed in any preceding claim where the target viscosity is from 2 to 6 Pa.s and is achieved with a fat edible material comprising 0.8% to 1.5% moisture by weight.

9. A process as claimed in any preceding claim where the fat based edible material is a fat based confectionery material, preferably is a choco-material, and preferably is chocolate mass or compound mass.

10. A process as claimed in any preceding claim where the rate of work is determined by equation (1A):

$$\ln \eta = 0.5919 - 0.4268 \ln \omega \qquad (1A)$$

11. A process as claimed in any preceding claim where the control parameters are set and/or adjusted using equation (1) to optimize a property selected from:
energy efficiency of the process and/or throughput of the fat material through the process.

12. A process as claimed in any preceding claim, the process additionally comprising pre-steps (D) (E) and (F) performed before steps (a) and (b) of;

(D) adding the fat based edible material to a receiving vessel that comprises an input orifice; and output orifice and at least one inwardly taping interior surface having a loosening means located on or near thereto, the output orifice of the receiving vessel being in fluid connection with the input conduit of the processing chamber;
(E) operating the loosening means sufficiently to loosen and/or substantially remove fat based material adhering to the interior surface;
(F) transporting the fat based material from the receiving vessel to the energy delivery means used in step (a) via the output orifice of the receiving vessel and the input conduit of the processing chamber.

13. A process as claimed in any preceding claim, the process additionally comprising pre-steps (G) and (H) performed before steps (a) and (b) of:

(G) refining the fat based edible material in a refiner with a output exit fluidly connected to the input conduit and processing chamber used in step (a), by subjecting the material to a shear of at least 200,000 s⁻¹ (high shear) for sufficient time to form a powdery mass which is used directly in steps (a) and (b),

(H) transporting the high shear refined powdery mass from step (E) via the output exit and input conduit to the energy delivery means used in step (a).

14. A process as claimed in any preceding claim, the process additionally comprising a pre-steps (J) and (K) performed before steps (a) and (b) of:

(J) refining the fat based edible material having solid agglomerates therein in a refiner with a output exit fluidly connected to the input conduit and processing chamber used in step (a),

by subjecting the material to a shear no more than 200,000 s$^{-1}$ (low shear) and total mixing energy no more than 1000 kW (low energy) calculated at a material flow rate of 20 kg/min; where the low shear, low energy mixing is performed for sufficient time to substantially break-up agglomerates and intimate interactions of any solids with the fat to produce a pasty mass in which solids therein are substantially coated with fat; the pasty mass being used directly in steps (a) and (b); and

(K) transporting the low shear low energy refined pasty mass from step (J) via the output exit and input conduit to the energy delivery means used in step (a).

**Patentansprüche**

1. Verfahren zum Ausüben spezifischer Arbeit auf ein essbares Material auf Fettbasis, um die Viskosität des Materials zu vermindern, bis das Material eine vorbestimmte Zielviskosität ($\eta_{target}$) erreicht, wobei das Verfahren folgende Schritte umfasst:

(a) Ausüben einer Gesamtmenge an spezifischer Arbeit $\overline{\omega}$ auf das essbare Material auf Fettbasis unter Verwendung eines Energiezufuhrmittels, das durch einen oder mehrere Steuerparameter betätigt wird, wobei sowohl die Geschwindigkeit, mit der spezifische Arbeit auf das Material ausgeübt wird, als auch die Gesamtmenge an spezifischer Arbeit, die auf das Material ausgeübt wird, durch den einen oder die mehreren Steuerparameter bestimmt werden; und

wobei das Material auf Fettbasis mit einer momentanen Fließgeschwindigkeit zu einem gegebenen Zeitpunkt 't' nach Beginn von Schritt (a) durch das Energiezufuhrmittel fließt, wobei der Fluss mit $Q_t$ bezeichnet wird

(b) Steuern des Energiezufuhrmittels, um eine vorbestimmte Zielviskosität ($\eta_{target}$) zu erreichen; wobei die Geschwindigkeit der spezifischen Arbeit, die auf das Material auf Fettbasis ausgeübt wird, durch Steuern eines oder mehrerer der Steuerparameter bestimmt wird, so dass die spezifische Arbeit, die durch das Energiezufuhrmittel zu einem Zeitpunkt t' nach Beginn von Schritt (a) ausgeübt wird, die in Gleichung 1 angegebene Beziehung erfüllt:

$$\ln \eta_t = A - B \ln \overline{\omega}_t \quad (1)$$

worin

(i) eta ($\eta_t$) die Viskosität des Materials auf Fettbasis zum Zeitpunkt t' nach Beginn von Schritt (a), gemessen als plastische Viskosität nach ICA-Verfahren 46 (2000) bezeichnet;
(ii) omega ($\overline{\omega}_t$) die Gesamtmenge an spezifischer Arbeit bezeichnet, die dem Material auf Fettbasis nach Zeitpunkt t' seit Beginn von Schritt (a) zugeführt wird, berechnet aus der Leistung und Fließgeschwindigkeit, wie in Gleichung (2):

$$\overline{\omega}_t = \frac{P_t}{Q_t} \quad (2)$$

angegeben, wobei:

$P_t$ die Leistung (gemessen in Kilowatt (kW)) bezeichnet, die auf das Material auf Fettbasis durch das Energiezufuhrmittel zum Zeitpunkt t' nach Beginn von Schritt (a) ausgeübt wird, $Q_t$ die momentane Fließgeschwindigkeit (gemessen in kg pro Stunde (kg/h)) des Materials auf Fettbasis durch das Energiezufuhrmittel zum Zeitpunkt t' nach Beginn von Schritt (a) bezeichnet; und

(iii) A von 0,5 bis 0,7 beträgt; und
(iv) B von 0,3 bis 0,6 beträgt.

(c) Stoppen des Ausübens spezifischer Arbeit durch das Energiezufuhrmittel auf das Material auf Fettbasis nach t=T, wobei die Zeit T anhand der Gleichungen (1) und (2) und der vorbestimmten Zielviskosität ($\eta_{target}$) bestimmt wird, wobei das Material auf Fettbasis ein Schoko-Material (vorzugsweise Schokolade oder Compound) ist und das Verfahren verwendet wird, um das Schoko-Material zu verflüssigen (d. h. die vorbestimmte Zielviskosität ($\eta_{target}$) ist flüssig).

2. Verfahren nach Anspruch 1, wobei ein Apparat verwendet wird, dem mindestens ein Sensormittel zugeordnet ist, und wobei in Schritt (a) das Sensormittel mindestens ein Attribut des Materials auf Fettbasis misst, um mindestens einen Eingangsparameter zu erzeugen, der direkt oder indirekt verwendet wird, um den mindestens einen Steuerparameter unter Verwendung von Gleichung (1) und optional auch Gleichung (2) zu berechnen.

3. Verfahren nach einem der vorstehenden Ansprüche, wobei

die mittlere (durchschnittliche) Leistung, die während der Dauer von Schritt (a) und (b) zugeführt wird, als $P_m$ bezeichnet wird, berechnet durch Messen der momentanen Leistung $Pt$, die zu verschiedenen unterschiedlichen Zeiten 't' aufgewendet wird, und/oder durch Mitteln der ausgeübten Gesamtenergie $\overline{\omega}$ über die Gesamtdauer 'T' von Schritt (a); und
die mittlere (durchschnittliche) Fließgeschwindigkeit (gemessen in kg pro Stunde (kg/h)) des Materials auf Fettbasis durch das Energiezufuhrmittel, das während der Dauer von Schritt (a) und (b) zugeführt wird, als $Q_m$ bezeichnet wird, berechnet durch Messen der momentanen Leistung $Q_t$, die zu verschiedenen unterschiedlichen Zeiten 't' aufgewendet wird, und wobei
die Gesamtmenge an spezifischer Arbeit, die auf das Material auf Fettbasis während Schritt (a) und (b) ausgeübt werden muss, um die vorbestimmte Zielviskosität ($\eta_{target}$) zu erreichen, mit $\overline{\omega}$ bezeichnet wird, berechnet aus Gleichung (1A):

$$\ln \eta_{target} = A - B \ln \varpi \qquad (1A);$$

und wobei die gesamte spezifische Arbeit $\overline{\omega}$, die auf das Material auf Fettbasis während Schritt (a) und (b) ausgeübt wird, auch durch Gleichung (2A) gegeben sein kann:

$$\varpi = \frac{P_m}{Q_m} \qquad (2A)$$

und wobei die Zeit T (bei der es sich um die Dauer handelt, während der das Energiezufuhrmittel in Schritt (a) spezifische Arbeit $\overline{\omega}$ auf das essbare Material auf Fettbasis ausübt) anhand der Werte $P_m$ und/oder $Q_m$ bestimmt wird.

4. Verfahren nach einem der vorstehenden Ansprüche, wobei A von 0,5 bis 0,7, vorzugsweise von 0,55 bis 0,65, vorzugsweise von 0,57 bis 0,61, vorzugsweise von 0,580 bis 0,605, vorzugsweise von 0,5900 bis 0,6000 ist oder 0,592 bis 3 signifikante Werte oder 0,5919 bis 4 signifikante Werte ist.

5. Verfahren nach einem der vorstehenden Ansprüche, wobei B von 0,3 bis 0,6, vorzugsweise von 0,35 bis 0,55, vorzugsweise von 0,37 bis 0,50, vorzugsweise von 0,410 bis 0,440, vorzugsweise von 0,4200 bis 0,4300 ist oder 0,427 bis 3 signifikante Werte oder 0,4268 bis 4 signifikante Werte ist.

6. Verfahren nach einem der vorstehenden Ansprüche zur Verminderung der Viskosität eines essbaren Materials auf Fettbasis, wobei in Schritt (a) das Mittel zum Ausüben von Arbeit einen Schritt des Mischens unter Verwendung eines Mischmittels umfasst, wobei die Mischgeschwindigkeit durch einen oder mehrere der Steuerparameter gesteuert wird.

7. Verfahren nach einem der vorstehenden Ansprüche zur Verminderung der Viskosität von essbarem Material auf Fettbasis, bis es eine Zielviskosität von 2 bis 6 Pa.s erreicht.

**8.** Verfahren nach einem der vorstehenden Ansprüche, wobei die Zielviskosität von 2 bis 6 Pa.s beträgt und mit einem essbaren Material auf Fettbasis erreicht wird, das zu 0,8 bis 1,5 Gew.-% Feuchtigkeit umfasst.

**9.** Verfahren nach einem der vorstehenden Ansprüche, wobei das essbare Material auf Fettbasis ein Süßwarenmaterial auf Fettbasis, vorzugsweise ein Schoko-Material, ist und vorzugsweise Schokoladenmasse oder Compound-Masse ist.

**10.** Verfahren nach einem der vorstehenden Ansprüche, wobei die Arbeitsgeschwindigkeit durch Gleichung (1A) bestimmt wird:

$$\ln \eta = 0{,}5919 - 0{,}4268 \ln \omega \qquad (1A)$$

**11.** Verfahren nach einem der vorstehenden Ansprüche, wobei die Steuerparameter unter Verwendung von Gleichung (1) eingestellt und/oder angepasst werden, um eine Eigenschaft zu optimieren, die ausgewählt ist aus: Energieeffizienz des Verfahrens und/oder Durchsatz des Fettmaterials durch das Verfahren.

**12.** Verfahren nach einem der vorstehenden Ansprüche, wobei das Verfahren zusätzlich Vorschritte (D), (E) und (F) umfasst, die vor Schritt (a) und (b) durchgeführt werden;

(D) Zugeben des essbaren Materials auf Fettbasis in ein Aufnahmegefäß, das eine Eingangsöffnung; und Ausgangsöffnung und mindestens eine sich nach innen verjüngende Innenoberfläche mit einem darauf oder in der Nähe davon befindlichen Lockerungsmittel umfasst, wobei die Ausgangsöffnung des Aufnahmegefäßes in Fluidverbindung mit der Eingangsleitung der Prozesskammer steht;
(E) ausreichendes Betätigen des Lockerungsmittels, um Material auf Fettbasis, das an der Innenoberfläche haftet, zu lockern und/oder im Wesentlichen zu entfernen;
(F) Transportieren des Materials auf Fettbasis vom Aufnahmegefäß zu dem in Schritt (a) verwendeten Energiezufuhrmittel über die Ausgangsöffnung des Aufnahmegefäßes und die Eingangsleitung der Prozesskammer.

**13.** Verfahren nach einem der vorstehenden Ansprüche, wobei das Verfahren zusätzlich Vorschritt (G) und (H) umfasst, die vor Schritt (a) und (b) durchgeführt werden:

(G) Verfeinern des essbaren Materials auf Fettbasis in einem Refiner mit einem Ausgang, der in Fluidverbindung mit der Eingangsleitung und Prozesskammer steht, die in Schritt (a) verwendet werden, indem das Material lange genug einer Scherung von mindestens 200.000 s$^{-1}$ (starke Scherung) ausgesetzt wird, um eine pulverförmige Masse zu bilden, die direkt in Schritt (a) und (b) verwendet wird,
(H) Transportieren der mit starker Scherung verfeinerten pulverförmigen Masse aus Schritt (E) über den Ausgang und die Eingangsleitung zu dem in Schritt (a) verwendeten Energiezufuhrmittel.

**14.** Verfahren nach einem der vorstehenden Ansprüche, wobei das Verfahren zusätzlich Vorschritte (J) und (K) umfasst, die vor Schritt (a) und (b) durchgeführt werden:

(J) Verfeinern des essbaren Materials auf Fettbasis, das feste Agglomeraten darin aufweist, in einem Refiner mit einem Ausgang, der in Fluidverbindung mit der Eingangsleitung und der in Schritt (a) verwendeten Prozesskammer steht,
indem das Material einer Scherung von nicht mehr als 200.000 s$^{-1}$ (geringe Scherung) und einer Gesamtmischenergie von nicht mehr als 1000 kW (geringe Energie), berechnet bei einer Materialfließgeschwindigkeit von 20 kg/min, ausgesetzt wird; wobei das Mischen mit geringer Scherung und geringer Energie lange genug durchgeführt wird, um Agglomerate und enge Wechselwirkungen von Feststoffen mit dem Fett im Wesentlichen aufzubrechen, so dass eine pastöse Masse entsteht, bei der darin enthaltene Feststoffe im Wesentlichen mit Fett überzogen sind; wobei die pastöse Masse direkt in Schritt (a) und (b) verwendet wird; und
(K) Transportieren der verfeinerten pastösen Masse mit geringer Scherung und geringer Energie aus Schritt (J) über den Ausgang und die Eingangsleitung zu dem in Schritt (a) verwendeten Energiezufuhrmittel.

**Revendications**

**1.** Procédé pour transmettre un travail spécifique à un matériau comestible à base de graisse pour réduire la viscosité du matériau jusqu'à ce qu'il atteigne une viscosité cible prédéterminée ($\eta_{cible}$), le procédé comprenant les étapes consistant à :

(a) transmettre une quantité totale de travail spécifique $\overline{\omega}$ dans la matière comestible à base de graisse en utilisant un moyen de distribution d'énergie actionné par un ou plusieurs paramètre(s) de commande, où à la fois la quantité totale de travail spécifique et la vitesse à laquelle elle est transmise au matériau sont déterminées par le ou les paramètre(s) de commande ; et
dans lequel le matériau à base de graisse s'écoule à travers le moyen de distribution d'énergie à un débit instantané à un moment donné dans le temps 't' après le début de l'étape (a), ledit écoulement étant noté $Q_t$

(b) commander le moyen de distribution d'énergie pour atteindre une viscosité cible prédéterminée ($\eta_{cible}$) ;
dans lequel le taux de travail spécifique transmis au matériau à base de graisse est déterminé en contrôlant un ou plusieurs du ou des paramètre(s) de commande, de telle sorte que le travail spécifique transmis par le moyen de distribution d'énergie à un instant t' après le début de l'étape (a) satisfait à la relation donnée dans l'équation 1 :

$$\ln \eta_t = A - B \ln \varpi_t \qquad (1)$$

où

(i) eta ($\eta_t$) désigne la viscosité au moment t' après le début de l'étape (a) du matériau à base de graisse mesuré en tant que viscosité plastique selon la méthode ICA 46 (2000) ;
(ii) oméga ($\overline{\omega_t}$) désigne la quantité totale de travail spécifique délivrée au matériau à base de graisse après le temps t' depuis le début de l'étape (a) calculé à partir de la puissance et du débit comme l'équation (2) donnée :

$$\varpi_t = \frac{P_t}{Q_t} \qquad (2),$$

où : $Pt$ désigne la puissance (mesurée en kilowatts (kW)) transmise au matériau à base de graisse par le moyen de transmission d'énergie au moment t' après le début de l'étape (a) $Q_t$ désigne le débit instantané (mesuré en kilogramme par heure (kg/h)) du matériau à base de graisse à travers le moyen de distribution d'énergie au moment t' après le début de l'étape (a) ; et
(iii) a est compris entre 0,5 et 0,7 ; et
(iv) b est compris entre 0,3 et 0,6.

(c) arrêter le moyen de distribution d'énergie après t = T de transmettre un travail spécifique au matériau à base de graisse, le temps T étant déterminé à partir des équations (1) et (2) et de la viscosité cible prédéterminée ($\eta_{cible}$), dans lequel le matériau à base de graisse est un matériau chocolaté (de préférence chocolat ou composé) et le procédé est utilisé pour liquéfier le matériau chocolaté (c'est-à-dire la viscosité cible prédéterminée ($\eta_{cible}$) est liquide).

2. Procédé selon la revendication 1, utilisant un appareil présentant au moins un système de capteur associé à celui-ci, et dans lequel, à l'étape (a), le système de capteur mesure au moins un attribut du matériau à base de graisse pour générer au moins un paramètre d'entrée utilisé directement ou indirectement pour calculer l'au moins un paramètre de commande en utilisant l'équation (1) et éventuellement également l'équation (2).

3. Procédé selon l'une quelconque des revendications précédentes, dans lequel

la puissance moyenne délivrée pendant la durée des étapes (a) et (b) est notée $P_m$ qui est calculée à partir de la mesure de la puissance instantanée $Pt$ utilisée à différents moments 't' et/ou en faisant la moyenne de l'énergie totale transmise $\overline{\omega}$ sur le temps de durée total 'T' de l'étape (a) ; et
le débit moyen (mesuré en kilogramme par heure (kg/h)) du matériau à base de graisse à travers le moyen de distribution d'énergie délivré pendant la durée des étapes (a) et (b) est noté $Q_m$ qui est calculé à partir de la mesure de la puissance instantanée $Q_t$ utilisée à des différents moments 't' et dans lequel
la quantité totale de travail spécifique nécessaire à transmettre au matériau à base de graisse au cours des étapes (a) et (b) pour atteindre la viscosité cible prédéterminée ($\eta_{cible}$) est désignée par $\overline{\omega}$ calculée à partir de l'équation (1A) :

$$\ln \eta_{cible} = A - B \ln \varpi \, (1A) \, ;$$

et où le travail spécifique total $\overline{\omega}$ transmis au matériau à base de graisse au cours des étapes (a) et (b) peut également être donné par l'équation (2A) :

$$\varpi = \frac{P_m}{Q_m} \qquad (2A)$$

et où le temps T (qui est la durée sur laquelle le moyen de transmission d'énergie transmet un travail spécifique $\overline{\omega}$ dans le matériau comestible à base de graisse dans l'étape (a)) est déterminé à partir des valeurs $P_m$ et/ou $Q_m$.

4. Procédé selon l'une quelconque des revendications précédentes, dans lequel A est compris entre 0,5 et 0,7, de préférence entre 0,55 et 0,65, de préférence entre 0,57 et 0,61, de préférence entre 0,580 et 0,605, de préférence entre 0,5900 et 0,6000 ou est compris entre 0,592 et 3 chiffres significatifs ou entre 0,5919 et 4 chiffres significatifs.

5. Procédé selon l'une quelconque des revendications précédentes, dans lequel B est compris entre 0,3 et 0,6, de préférence entre 0,35 et 0,55, de préférence entre 0,37 et 0,50, de préférence entre 0,410 et 0,440, de préférence entre 0,4200 et 0,4300 ou est compris entre 0,427 et 3 chiffres significatifs ou est compris entre 0,4268 et 4 chiffres significatifs.

6. Procédé selon l'une quelconque des revendications précédentes, pour réduire la viscosité d'un matériau comestible à base de graisse, dans lequel l'étape (a) le moyen transmettant un travail comprend une étape de mélange en utilisant un moyen de mélange où la vitesse de mélange est commandée par un ou plusieurs des paramètres de commande.

7. Procédé selon l'une quelconque des revendications précédentes, pour réduire la viscosité d'un matériau comestible à base de graisse jusqu'à ce qu'il atteigne une viscosité cible de 2 à 6 Pa.s.

8. Procédé selon l'une quelconque des revendications précédentes, dans lequel la viscosité cible est comprise entre 2 et 6 Pa.s et est obtenue avec une matière comestible gras comprenant 0,8 % à 1,5 % en poids d'humidité.

9. Procédé selon l'une quelconque des revendications précédentes, dans lequel la matière comestible à base de graisse est une matière de confiserie à base de graisse, de préférence est une matière chocolatée, et de préférence est une masse de chocolat ou une masse de composé.

10. Procédé selon l'une quelconque des revendications précédentes, dans lequel la vitesse de travail est déterminée par l'équation (1A) :

$$\ln \eta = 0,5919 - 0,4268 \ln \omega \qquad (1A)$$

11. Procédé selon l'une quelconque des revendications précédentes, dans lequel les paramètres de commande sont réglés et/ou ajustés en utilisant l'équation (1) pour optimiser une propriété sélectionnée à partir de :
un rendement énergétique du procédé et/ou un débit de la matière grasse à travers le procédé.

12. Procédé selon l'une quelconque des revendications précédentes, le procédé comprenant en outre des étapes préliminaires (D) (E) et (F) réalisées avant les étapes (a) et (b) consistant à ;

(D) ajouter la matière comestible à base de graisse à une cuve de réception qui comprend un orifice d'entrée ; et un orifice de sortie et au moins une surface intérieure de taraudage vers l'intérieur présentant un moyen de desserrage situé sur ou près de celle-ci, l'orifice de sortie de la cuve de réception étant en communication fluidique avec le conduit d'entrée de la chambre de traitement ;

EP 3 609 342 B1

(E) actionner les moyens de desserrage suffisamment pour desserrer et/ou retirer sensiblement la matière à base de graisse adhérant à la surface intérieure ;

(F) transporter le matériau à base de graisse de la cuve de réception vers le moyen de distribution d'énergie utilisé à l'étape (a) via l'orifice de sortie de la cuve de réception et le conduit d'entrée de la chambre de traitement.

13. Procédé selon l'une quelconque des revendications précédentes, le procédé comprenant en outre des étapes préliminaires (G) et (H) réalisées avant les étapes (a) et (b) consistant à :

(G) affiner la matière comestible à base de graisse dans un affineur avec une sortie reliée fluidiquement au conduit d'entrée et à la chambre de traitement utilisée à l'étape (a), en soumettant le matériau à un cisaillement d'au moins 200 000 s$^{-1}$ (cisaillement élevé) pendant un temps suffisant pour former une masse pulvérulente qui est utilisée directement dans les étapes (a) et (b),

(H) transporter la masse pulvérulente affinée à cisaillement élevé de l'étape (E) via la sortie et le conduit d'entrée vers le moyen de distribution d'énergie utilisé à l'étape (a).

14. Procédé selon l'une quelconque des revendications précédentes, le procédé comprenant en outre des étapes préliminaires (J) et (K) réalisées avant les étapes (a) et (b) consistant à :

(J) affiner la matière comestible à base de graisse présentant des agglomérats solides dans celle-ci dans un affineur avec une sortie reliée fluidiquement au conduit d'entrée et à la chambre de traitement utilisée à l'étape (a), en soumettant le matériau à un cisaillement qui n'est pas supérieur à 200 000 s$^{-1}$ (faible cisaillement) et à une énergie totale de mélange ne dépassant pas 1000 kW (faible énergie) calculée à un débit de matériau de 20 kg/min ; dans lequel le mélange à faible cisaillement et à faible énergie est effectué pendant un temps suffisant pour rompre sensiblement les agglomérats et les interactions intimes d'éventuels solides avec la graisse, afin de produire une masse pâteuse dans laquelle les matières solides à l'intérieur sont sensiblement revêtues de graisse ; la masse pâteuse étant utilisée directement dans les étapes (a) et (b) ; et

(K) transporter la masse pâteuse affinée à faible cisaillement de l'étape (J) via la sortie et le conduit d'entrée vers le moyen de distribution d'énergie utilisé à l'étape (a).

35

Figure 1

Figure 2

Figure 3 (Example 5)

Figure 4 (Comp B)

Figure 5 (Example 6)

Figure 6 (Comp C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200400028 A
- EP 0603487 A
- EP 0775446 A
- US 4679498 A

- US 4861615 A
- US 3663231 A
- US 4191786 A
- EP 0940085 A

**Non-patent literature cited in the description**

- **TRAITLER, H. et al.** *Journal of the American Oil Chemists Society,* 1985, vol. 62 (2), 417-21
- Beckett. 2009
- Flavour development in cocoa and chocolate
- Conching
- Chocolate Flow Properties
- Beckett
- **AFOAKWA et al.** Factors influencing rheological and textural qualities in chocolate - a review. *Trends in Food Sci &Tech,* 2007, vol. 18, 290-298
- **C. SERVAIS ; H. RANC ; I.D. ROBERTS.** Determination of chocolate viscosity. *Journal of Texture Studies,* vol. 34, 467-497

- **EMMANUEL OHENE AFOAKWA ; ALISTAIR PATERSON ; MARK FOWLER ; JOSELIO VIEIRA.** Comparison of rheological models for determining dark chocolate viscosity. *International Journal of Food Science and Technology,* vol. 44, 162-167
- **KOOS E. ; WILLENBACHER N.** *Science,* 2011, vol. 331 (6019), 897-900
- **KOOS E.** *Curr. Opin. Colloid Interface Sci.,* 2014, vol. 19 (6), 575-684
- **BOSSLER F. ; KOOS E.** *Langmuir,* 2016, vol. 32 (6), 1489-1501